(19) Europäisches Patentamt / European Patent Office / Office européen des brevets

(11) **EP 3 187 601 B1**

(12) **EUROPEAN PATENT SPECIFICATION**

(45) Date of publication and mention
of the grant of the patent:
**09.01.2019 Bulletin 2019/02**

(21) Application number: **15829318.3**

(22) Date of filing: **05.08.2015**

(51) Int Cl.:
*C21D 9/46* *(2006.01)*      *C21D 8/02* *(2006.01)*
*C22C 38/04* *(2006.01)*    *C22C 38/00* *(2006.01)*
*C22C 38/02* *(2006.01)*    *C22C 38/06* *(2006.01)*
*C22C 38/12* *(2006.01)*    *C22C 38/16* *(2006.01)*
*C22C 38/18* *(2006.01)*    *C22C 38/14* *(2006.01)*
*C22C 38/38* *(2006.01)*    *C21D 1/26* *(2006.01)*
*B32B 15/01* *(2006.01)*

(86) International application number:
**PCT/JP2015/003946**

(87) International publication number:
**WO 2016/021195 (11.02.2016 Gazette 2016/06)**

(54) **HIGH-STRENGTH STEEL SHEET AND METHOD FOR MANUFACTURING SAME**

HOCHFESTES STAHLBLECH UND VERFAHREN ZUR HERSTELLUNG DAVON

TÔLE D'ACIER À HAUTE RÉSISTANCE AINSI QUE PROCÉDÉ DE FABRICATION DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2014 JP 2014161676**

(43) Date of publication of application:
**05.07.2017 Bulletin 2017/27**

(73) Proprietor: **JFE Steel Corporation
Tokyo 100-0011 (JP)**

(72) Inventors:
• **KAWASAKI, Yoshiyasu
Tokyo 100-0011 (JP)**
• **MATSUDA, Hiroshi
Tokyo 100-0011 (JP)**
• **YOKOTA, Takeshi
Tokyo 100-0011 (JP)**
• **FUNAKAWA, Yoshimasa
Tokyo 100-0011 (JP)**
• **SETO, Kazuhiro
Tokyo 100-0011 (JP)**
• **MATSUBARA, Yukihiro
Tokyo 100-0011 (JP)**

(74) Representative: **Haseltine Lake LLP
Bürkleinstrasse 10
80538 München (DE)**

(56) References cited:
EP-A1- 2 182 080       EP-A1- 2 692 895
WO-A1-2012/147898    WO-A1-2013/005714
WO-A1-2013/046697    WO-A1-2014/092025
JP-A- H11 343 521       JP-A- 2011 214 081
KR-A- 20130 070 825

**Description**

TECHNICAL FIELD

This disclosure relates to a high-strength steel sheet with excellent formability which is mainly suitable for automobile structural members and a method for manufacturing the same, and in particular, to provision of a high-strength steel sheet with high productivity that has a tensile strength (TS) of 780 MPa or more and that is excellent in ductility as well as in fatigue properties.

BACKGROUND

In order to secure passenger safety upon collision and to improve fuel efficiency by reducing the weight of automotive bodies, high-strength steel sheets reduced in thickness and having a tensile strength (TS) of 780 MPa or more have been increasingly applied to automobile structural members. Further, in recent years, examination has been made of applications of ultra-high-strength steel sheets with 980 MPa and 1180 MPa grade TS.

In general, however, strengthening of steel sheets leads to deterioration in formability. It is thus difficult to achieve both increased strength and excellent formability. Therefore, it is desirable to develop steel sheets with increased strength and excellent formability.

It is also desirable for steel sheets to have excellent fatigue properties since the travelable distance (total running distance) of automobiles depends on the fatigue strength of steel sheets applied to the automobile structural members.

To meet these demands, for example, JP2004218025A (PTL 1) describes "a high-strength steel sheet with excellent workability and shape fixability comprising: a chemical composition containing, in mass%, C: 0.06 % to 0.6 %, Si + Al: 0.5 % to 3 %, Mn: 0.5 % to 3 %, P: 0.15 % or less (exclusive of 0 %), and S: 0.02 % or less (inclusive of 0 %); and a structure that contains tempered martensite: 15 % or more by area to the entire structure, ferrite: 5 % to 60 % by area to the entire structure, and retained austenite: 5 % or more by volume to the entire structure, and that may contain bainite and/or martensite, wherein a ratio of the retained austenite transforming to martensite upon application of a 2 % strain is 20 % to 50 %.

JP2011195956A (PTL 2) describes "a high-strength thin steel sheet with excellent elongation and hole expansion formability, comprising: a chemical composition containing, in mass%, C : 0.05 % or more and 0.35 % or less, Si: 0.05 % or more and 2.0 % or less, Mn: 0.8 % or more and 3.0 % or less, P : 0.0010 % or more and 0.1 % or less, S : 0.0005 % or more and 0.05 % or less, N : 0.0010 % or more and 0.010 % or less, and Al: 0.01 % or more and 2.0 % or less, and the balance consisting of iron and incidental impurities; and a metallographic structure that includes a dominant phase of ferrite, bainite, or tempered martensite, and a retained austenite phase in an amount of 3 % or more and 30 % or less, wherein at a phase interface at which the austenite phase comes in contact with the ferrite phase, bainite phase, and martensite phase, a mean carbon concentration in the austenite phase is 0.6 % or more and 1.2 % or less, and austenite grains that satisfy $C_{gb}/C_{gc} > 1.3$ are present in the austenite phase in an amount of 50 % or more, where $C_{gc}$ is a central carbon concentration and $C_{gb}$ is a carbon concentration at grain boundaries of austenite grains.

JP201090475A (PTL 3) describes "a high-strength steel sheet comprising a chemical composition containing, in mass%, C : 0.17 % or more and 0.73 % or less, Si: 3.0 % or less, Mn: 0.5 % or more and 3.0 % or less, P: 0.1 % or less, S: 0.07 % or less, Al: 3.0 % or less, and N: 0.010 % or less, where Si + Al is 0.7 % or more, and the balance consisting of Fe and incidental impurities; and a structure that contains martensite: 10 % or more and 90 % or less by area to the entire steel sheet structure, retained austenite content: 5 % or more and 50 % or less, and bainitic ferrite in upper bainite: 5 % or more by area to the entire steel sheet structure, wherein the steel sheet satisfies conditions that 25 % or more of the martensite is tempered martensite, a total of the area ratio of the martensite to the entire steel sheet structure, the retained austenite content, and the area ratio of the bainitic ferrite in upper bainite to the entire steel sheet structure is 65 % or more, and an area ratio of polygonal ferrite to the entire steel sheet structure is 10 % or less (inclusive of 0 %), and wherein the steel sheet has a mean carbon concentration of 0.70 % or more in the retained austenite and has a tensile strength of 980 MPa or more.

JP2008174802A (PTL 4) describes "a high-strength cold-rolled steel sheet with a high yield ratio and having a tensile strength of 980 MPa or more, the steel sheet comprising, on average, a chemical composition that contains, by mass%, C : more than 0.06 % and 0.24 % or less, Si $\leq$ 0.3 %, Mn: 0.5 % to 2.0 %, P $\leq$ 0.06 %, S $\leq$ 0.005 %, Al $\leq$ 0.06 %, N $\leq$ 0.006 %, Mo: 0.05 % to 0.5 %, Ti: 0.03 % to 0.2 %, and V: more than 0.15 % and 1.2 % or less, and the balance consisting of Fe and incidental impurities, wherein the contents of C, Ti, Mo, and V satisfy $0.8 \leq (C/12)/\{(Ti/48) + (Mo/96) + (V/51)\} \leq 1.5$, and wherein an area ratio of ferrite phase is 95 % or more, and carbides containing Ti, Mo, and V with a mean grain size of less than 10 nm are diffused and precipitated, where Ti, Mo, and V contents represented by atomic percentage satisfy $V/(Ti + Mo + V) \geq 0.3$.

JP2010275627A (PTL 5) describes "a high-strength steel sheet with excellent workability comprising a chemical composition containing C : 0.05 mass% to 0.3 mass%, Si: 0.01 mass% to 2.5 mass%, Mn: 0.5 mass% to 3.5 mass%, P: 0.003 mass% to 0.100 mass%, S: 0.02 mass% or less, and Al: 0.010 mass% to 1.5 mass%, where a total of the Si and Al contents is 0.5 mass% to 3.0 mass%, and the balance consisting of Fe and incidental impurities; and a metallic structure that contains, by area, ferrite: 20 % or more, tempered martensite: 10 % to 60 %, and martensite: 0 % to 10 %, and that contains, by volume, retained austenite: 3 % to 10 %, where a ratio (m)/(f) of a Vickers hardness (m) of the tempered martensite to a Vickers hardness (f) of the ferrite is 3.0 or less.

JP4268079B (PTL 6) describes "an ultra-high-strength steel sheet exhibiting an excellent elongation in an ultra-high-strength range with a tensile strength of 1180 MPa or more, and having excellent hydrogen embrittlement resistance, the steel sheet comprising a chemical composition containing, in mass%, C : 0.06 % to 0.6 %, Si + Al: 0.5 % to 3 %, Mn: 0.5 % to 3 %, P : 0.15 % or less (exclusive of 0 %), S: 0.02 % or less (inclusive of 0 %), and the balance: Fe and incidental impurities; and a structure that contains tempered martensite: 15 % to 60 % by area to the entire structure, ferrite: 5 % to 50 % by area to the entire structure, retained austenite: 5 % or more by area to the entire structure, and massive martensite with an aspect ratio of 3 or less: 15 % to 45 %, where an area ratio of fine martensite having a mean grain size of 5 $\mu$m or less in the massive martensite is 30 % or more.

PTL 6 also describes a method for manufacturing the ultra-high-strength steel sheet comprising: heating and retaining a steel satisfying the aforementioned composition at a temperature from A$_3$ to 1100 °C for 10 s or more, and then cooling the steel at a mean cooling rate of 30 °C/s or higher to a temperature at or below Ms, and repeating this cycle at least twice; and heating and retaining the steel at a temperature from (A$_3$ - 25 °C) to A$_3$ for 120 s to 600 s, and then cooling the steel at a mean cooling rate of 3 °C/s or higher to a temperature at or above Ms and at or below Bs, at which the steel is retained for at least one second.

PTL 7 also describes a high-strength galvanized steel sheet, wherein the method of manufacture comprises a cold-rolling step with a 30% reduction ratio after pickling, and prior to reheating and galvannealing. This causes a low temperature transformation in the steel in the structure of the sheet to be broken, making it difficult to provide the steel sheet after annealing with the appropriate microstructure, and making it therefore difficult to ensure ductility and to balance strength and ductility, or guarantee good fatigue properties.

CITATION LIST

Patent Literature

PTL 1: JP2004218025A
PTL 2: JP2011195956A
PTL 3: JP201090475A
PTL 4: JP2008174802A
PTL 5: JP2010275627A
PTL 6: JP4268079B
PTL 7: EP2182080

SUMMARY

(Technical Problem)

In fact, PTL 1 teaches the high-strength steel sheet has excellent workability and shape fixability, PTL 2 teaches the high-strength thin steel sheet has excellent elongation and hole expansion formability, PTL 3 teaches the high-strength steel sheet has excellent workability, in particular, excellent ductility and stretch flangeability. None of them however takes into account fatigue properties.

The high-strength cold-rolled steel sheet with a high yield ratio described in PTL 4 uses expensive elements, Mo and V, which results in increased costs and a low elongation (EL), which is as low as approximately 19 %.

The high-strength steel sheet described in PTL 5 exhibits, for example, TS of 980 MPa or more and TS $\times$ EL of approximately 24000 MPa·%, which remain, although may be relatively high when compared to general-use material, insufficient to meet the ongoing requirements for steel sheets.

The ultra-high tensile-strength steel sheet described in PTL 6 requires performing annealing treatment at least three times during its manufacture, resulting in low productivity in actual facilities.

It could thus be helpful to provide a method that can manufacture a high-strength steel sheet with high productivity that has a tensile strength (TS) of 780 MPa or more and that is excellent not only in ductility but also in fatigue properties, by performing a single annealing treatment at a ferrite-austenite dual phase region to form a fine structure that contains appropriate amounts of ferrite, bainitic ferrite, and retained austenite.

It could also be helpful to provide a high-strength steel sheet manufactured by the method.

As used herein, the term "high-strength steel sheet" is intended to include high-strength galvanized steel sheets having a galvanized surface.

A steel sheet obtained according to the disclosure has the following target properties:

- Tensile strength (TS)
  780 MPa or more
- Ductility

  TS 780 MPa grade: EL $\geq$ 34 %
  TS 980 MPa grade: EL $\geq$ 27 %
  TS 1180 MPa grade: EL $\geq$ 23 %

- Balance between strength and ductility
  TS $\times$ EL $\geq$ 27000 MPa·%
- Fatigue property
  fatigue limit strength $\geq$ 400 MPa, and fatigue ratio $\geq$ 0.40
  As used herein, the term "fatigue ratio" means a ratio of fatigue limit strength to tensile strength.

(Solution to Problem)

Upon carefully examining how to manufacture a steel sheet having TS of 780 MPa or more and excellent not only in ductility but also in fatigue properties with high productivity, we discovered the following.

(1) To obtain a steel sheet having a tensile strength (TS) of 780 MPa or more and excellent not only in ductility but also in fatigue properties, it is important to prepare an appropriate chemical composition and to form a structure that contains appropriate amounts of ferrite, bainitic ferrite, and retained austenite, and in which fine retained austenite and fine bainitic ferrite are distributed.

(2) In addition, to form such a structure, it is important to provide the steel sheet with a structure prior to annealing treatment in which a single phase structure of martensite, a single phase structure of bainite, or a martensite-bainite mixed structure is dominantly present, while controlling annealing treatment conditions properly.

In this respect, in order for the steel sheet to have such a pre-annealing structure without subjection to separate annealing treatment, it is important to perform appropriate slab reheating and optimize hot rolling conditions, in particular, to keep the mean coiling temperature (CT) following hot rolling low.

(3) Moreover, when cold rolling is performed after hot rolling, it is important to set a low rolling reduction such that the resulting structure of the hot-rolled steel sheet in which a single phase structure of martensite, a single phase structure of bainite, or a martensite-bainite mixed phase structure is dominantly present will remain intact as much as possible.

The disclosure is based on the aforementioned discoveries and further studies.

Specifically, the invention is disclosed in claims 1 to 3.

(Advantageous Effect)

According to the disclosure, it becomes possible to manufacture a high-strength steel sheet having a tensile strength (TS) of 780 MPa or more and excellent not only in ductility but also in fatigue properties with high productivity. Also, a high-strength steel sheet manufactured by the method according to the disclosure is highly beneficial in industrial terms, because it can improve fuel efficiency when applied to, e.g., automobile structural members by a reduction in the weight of automotive bodies.

DETAILED DESCRIPTION

The present invention will be specifically described below. According to the method disclosed herein, a steel slab with a predetermined chemical composition is heated and hot rolled. At this point, it is important to keep the mean coiling temperature (CT) during hot rolling low so that the hot-rolled steel sheet is provided with a structure in which a single phase structure of martensite, a single phase structure of bainite, or a martensite-bainite mixed structure is dominantly present.

It is also important when cold rolling is performed after hot rolling to set as low a rolling reduction as possible so that the resulting structure of the hot-rolled steel sheet will remain intact as much as possible.

In this way, a single phase structure of martensite, a single phase structure of bainite, or a martensite-bainite mixed structure is dominantly present in the structure of the steel sheet before subjection to annealing treatment. Consequently, even when annealing treatment is performed just once at a ferrite-austenite dual phase region, it becomes possible to form a structure that contains appropriate amounts of ferrite, bainitic ferrite, and retained austenite, and in which fine retained austenite and fine bainitic ferrite are distributed.

As a result, it becomes possible to manufacture a high-strength steel sheet having a tensile strength (TS) of 780 MPa or more and excellent not only in ductility but also in fatigue properties with high productivity.

Firstly, the reasons for the limitations on the chemical composition of the steel manufactured according to our methods are described.

When components are expressed in "%," this refers to "mass%" unless otherwise specified.

### C: 0.10 % or more and 0.35 % or less

C is an element that is important for increasing the strength of steel, has a high solid solution strengthening ability, and is essential for guaranteeing the presence of a desired amount of retained austenite to improve ductility.

If the C content is below 0.10 %, it becomes difficult to obtain the required amount of retained austenite. If the C content exceeds 0.35 %, however, the steel sheet is made brittle or susceptible to delayed fracture.

Therefore, the C content is 0.10 % or more and 0.35 % or less, preferably 0.15 % or more and 0.30 % or less, and more preferably 0.18 % or more and 0.26 % or less.

### Si: 0.50 % or more and 2.50 % or less

Si is an element that is effective in suppressing decomposition of retained austenite to carbides. Si also exhibits a high solid solution strengthening ability in ferrite, and has the property of purifying ferrite by facilitating solute C diffusion from ferrite to austenite to improve ductility. Moreover, Si dissolved in ferrite improves strain hardenability and increases the ductility of ferrite itself. To obtain this effect, the Si content needs to be 0.50 % or more. If the Si content exceeds 2.50 %, however, an abnormal structure grows, causing ductility to deteriorate.

Therefore, the Si content is 0.50 % or more and 2.50 % or less, preferably 0.80 % or more and 2.00 % or less, and more preferably 1.20 % or more and 1.80 % or less.

### Mn: 2.00 % or more and less than 3.50 %

Mn is effective in guaranteeing strength. Mn also improves hardenability to facilitate formation of a multi-phase structure. Moreover, Mn acts to suppress formation of ferrite and pearlite during a cooling process after hot rolling, and thus is an effective element in causing the hot-rolled sheet to have a structure in which a low temperature transformation phase (bainite or martensite) is dominantly present. To obtain this effect, the Mn content needs to be 2.00 % or more. If the Mn content is 3.50 % or more, however, Mn segregation becomes significant in the sheet thickness direction, leading to deterioration of fatigue properties.

Therefore, the Mn content is 2.00 % or more and less than 3.50 %, preferably 2.00 % or more and 3.00 % or less, and more preferably 2.00 % or more and 2.80 % or less.

### P: 0.001 % or more and 0.100 % or less

P is an element that has a solid solution strengthening effect and can be added depending on a desired strength. P also facilitates transformation to ferrite, and thus is an effective element in forming a multi-phase structure. To obtain this effect, the P content needs to be 0.001 % or more. If the P content exceeds 0.100 %, however, weldability degrades and, when a galvanized layer is subjected to alloying treatment, the alloying rate decreases, impairing galvanizing quality.

Therefore, the P content is 0.001 % or more and 0.100 % or less, and preferably 0.005 % or more and 0.050 % or less.

### S: 0.0001 % or more and 0.0200 % or less

S segregates to grain boundaries, makes the steel brittle during hot working, and forms sulfides to reduce local deformability. Therefore, the S content needs to be 0.0200 % or less. Under manufacturing constraints, however, the S content is necessarily 0.0001 % or more.

Therefore, the S content is 0.0001 % or more and 0.0200% or less, and preferably 0.0001 % or more and 0.0050 % or less.

**N: 0.0005 % or more and 0.0100 % or less**

N is an element that deteriorates the anti-aging property of steel. Deterioration of the anti-aging property becomes more pronounced, particularly when the N content exceeds 0.0100 %. Under manufacturing constraints, the N content is necessarily 0.0005 % or more, although smaller N contents are more preferable.

Therefore, the N content is 0.0005 % or more and 0.0100 % or less, and preferably 0.0005 % or more and 0.0070 % or less.

In addition to the above basic components, at least one element selected from the group consisting of Ti and B may also be included. In particular, when the steel contains both Ti and B in appropriate amounts, the resulting hot-rolled sheet may be provided more advantageously with a structure in which a single phase structure of martensite, a single phase structure of bainite, or a martensite-bainite mixed structure is dominantly present.

**Ti: 0.005 % or more and 0.100 % or less**

Ti forms fine precipitates during hot rolling or annealing to increase strength. In addition, Ti precipitates as TiN with N, and may thus suppress precipitation of BN when B is added to the steel, thereby effectively bringing out the effect of B as described below. To obtain this effect, the Ti content needs to be 0.005 % or more. If the Ti content exceeds 0.100 %, however, strengthening by precipitation works excessively, leading to deterioration of ductility. Therefore, the Ti content is preferably 0.005 % or more and 0.100 % or less, and more preferably 0.010 % or more and 0.080 % or less.

**B: 0.0001 % or more and 0.0050 % or less**

B has the effect of suppressing ferrite-pearlite transformation during a cooling process after hot rolling so that the hot-rolled sheet has a structure in which a low temperature transformation phase (bainite or martensite), in particular martensite is dominantly present. B is also effective in increasing the strength of steel. To obtain this effect, the B content needs to be 0.0001 % or more. However, excessively adding B beyond 0.0050 % forms excessive martensite, raising a concern that ductility might decrease due to a rise in strength.

Therefore, the B content is preferably 0.0001 % or more and 0.0050 % or less, and more preferably 0.0005 % or more and 0.0030 % or less.

**Mn content/B content: 2100 or less**

In particular for a low-Mn chemical composition, ferrite-pearlite transformation develops during a cooling process after hot rolling, which tends to cause ferrite and/or pearlite to be present in the structure of the hot-rolled sheet. As such, to bring out the above-described addition effect of B sufficiently, it is preferred that the Mn content divided by the B content (Mn content/B content) equals 2100 or less, and more preferably 2000 or less. No lower limit is particularly placed on the Mn content/B content, yet a preferred lower limit is approximately 300.

In addition to the above components, at least one element selected from the group consisting of the following may also be included:

Al: 0.01 % or more and 1.00 % or less, Nb: 0.005 % or more and 0.100 % or less, Cr: 0.05 % or more and 1.00 % or less, Cu: 0.05 % or more and 0.50 % or less, Sb: 0.002 % or more and 0.200 % or less, Sn: 0.002 % or more and 0.200 % or less, Ta: 0.001 % or more and 0.100 % or less, Ca: 0.0005 % or more and 0.0050 % or less, Mg: 0.0005 % or more and 0.0050 % or less, and REM: 0.0005 % or more and 0.0050 % or less.

**Al: 0.01 % or more and 1.00 % or less**

Al is an element that is effective in forming ferrite and improving the balance between strength and ductility. To obtain this effect, the Al content needs to be 0.01 % or more. On the other hand, an Al content exceeding 1.00 % leads to deterioration of surface characteristics.

Therefore, when Al is added to steel, the Al content is 0.01 % or more and 1.00 % or less, and preferably 0.03 % or more and 0.50 % or less.

**Nb: 0.005 % or more and 0.100 % or less**

Nb forms fine precipitates during hot rolling or annealing to increase strength. To obtain this effect, the Nb content needs to be 0.005 % or more. If the Nb content exceeds 0.100 %, however, formability deteriorates.

Therefore, when Nb is added to steel, the Nb content is 0.005 % or more and 0.100 % or less.

**Cr: 0.05 % or more and 1.00 % or less, Cu: 0.05 % or more and 0.50 % or less**

Cr and Cu not only serve as solid-solution-strengthening elements, but also act to stabilize austenite in a cooling process during annealing, facilitating formation of a multi-phase structure. To obtain this effect, the Cr and Cu contents each need to be 0.05 % or more. If the Cr content exceeds 1.00 % and the Cu content exceeds 0.50 %, formability deteriorates.

Therefore, when Cr and Cu are added to steel, the Cr content is 0.05 % or more and 1.00 % or less and the Cu content is 0.05 % or more and 0.50 % or less.

**Sb: 0.002 % or more and 0.200 % or less, Sn: 0.002 % or more and 0.200 % or less**

Sb and Sn may be added as necessary for suppressing decarbonization of a region extending from the surface layer of the steel sheet to a depth of about several tens of micrometers, which is caused by nitriding and/or oxidation of the steel sheet surface. Suppressing such nitriding or oxidation is effective in preventing a reduction in the amount of martensite formed in the steel sheet surface and guaranteeing strength. To obtain this effect, the Sb and Sn contents each need to be 0.002 % or more. However, excessively adding any of these elements beyond 0.200 % leads to deterioration of toughness. Therefore, when Sb and Sn are added to steel, respective contents are 0.002 % or more and 0.200 % or less.

**Ta: 0.001 % or more and 0.100 % or less**

As is the case with Ti and Nb, Ta forms alloy carbides or alloy carbonitrides, and contributes to increasing the strength of steel. It is also believed that Ta has the effect of significantly suppressing coarsening of precipitates when partially dissolved in Nb carbides or Nb carbonitrides to form complex precipitates, such as (Nb, Ta) (C, N), and providing a stable contribution to increasing strength through strengthening by precipitation. This precipitate-stabilizing effect can be obtained when the Ta content is 0.001 % or more. However, excessively adding Ta beyond 0.100 % fails to further increase the precipitate-stabilizing effect, but instead increases alloy costs. Therefore, when Ta is added to steel, the Ta content is 0.001 % or more and 0.100 % or less.

**Ca: 0.0005 % or more and 0.0050 % or less, Mg: 0.0005 % or more and 0.0050 % or less, REM: 0.0005 % or more and 0.0050 % or less**

Ca, Mg, and REM are elements that are used for deoxidation, and are effective in causing spheroidization of sulfides and mitigating the adverse effect of sulfides on local ductility and stretch flangeability. To obtain this effect, Ca, Mg, and REM each need to be added to steel in an amount of 0.0005 % or more. However, excessively adding Ca, Mg, and REM beyond 0.0050 % leads to increased inclusions and the like, causing defects on the steel sheet surface and internal defects.

Therefore, when Ca, Mg, and REM are added to steel, respective contents are 0.0005 % or more and 0.0050 % or less.

The balance other than the above components consists of Fe and incidental impurities.

The following provides a description of manufacturing conditions in the method according to the disclosure.

The method for manufacturing a high-strength steel sheet according to the disclosure comprises: preparing a steel slab with the aforementioned chemical composition; subjecting the steel slab to hot rolling by heating the steel slab to a temperature of 1100 °C or higher and 1300 °C or lower, hot rolling the steel slab with a finisher delivery temperature of 800 °C or higher and 1000 °C or lower to form a hot-rolled steel sheet, and coiling the hot-rolled steel sheet at a mean coiling temperature of 200 °C or higher and 500 °C or lower; subjecting the hot-rolled steel sheet to pickling treatment; optionally cold rolling the hot-rolled steel sheet at a rolling reduction below 30 % to form a cold-rolled steel sheet; and subjecting the hot-rolled or cold-rolled steel sheet to annealing by retaining the steel sheet at a temperature of 740 °C or higher and 840 °C or lower for 10 s or more and 900 s or less, then cooling the steel sheet at a mean cooling rate of 5 °C/s or higher and 50 °C/s or lower to a cooling stop temperature of higher than 350 °C and 550 °C or lower, and retaining the steel sheet in a temperature range of higher than 350 °C to 550 °C for 10 s or more.

In the above steps, the temperatures, such as the finisher delivery temperature, the mean coiling temperature, and the like, all represent temperatures measured at the steel sheet surface. The mean cooling rate is also calculated from temperatures measured at the steel sheet surface.

The following explains the reasons for the limitations placed on the manufacturing conditions.

**Steel slab heating temperature: 1100 °C or higher and 1300 °C or lower**

Precipitates that are present at the time of heating of a steel slab will remain as coarse precipitates in the resulting steel sheet, making no contribution to strength. Thus, remelting of any Ti- and Nb-based precipitates precipitated during casting is required.

In this respect, if a steel slab is heated at a temperature below 1100 °C, it is difficult to cause sufficient melting of carbides, leading to problems such as an increased risk of trouble during hot rolling resulting from increased rolling load. In addition, for obtaining a smooth steel sheet surface, it is necessary to scale-off defects on the surface layer of the slab, such as blow hole generation, segregation, and the like, and to reduce cracks and irregularities on the steel sheet surface. Therefore, the steel slab heating temperature needs to be 1100 °C or higher.

If the steel slab heating temperature exceeds 1300 °C, however, scale loss increases as oxidation progresses. Therefore, the steel slab heating temperature needs to be 1300 °C or lower.

For this reason, the steel slab heating temperature is 1100 °C or higher and 1300 °C or lower, and preferably 1150 °C or higher and 1250 °C or lower.

A steel slab is preferably made with continuous casting to prevent macro segregation, yet may be produced with other methods such as ingot casting or thin slab casting. The steel slab thus produced may be cooled to room temperature and then heated again according to the conventional method. Alternatively, there can be employed without problems what is called "energy-saving" processes, such as hot direct rolling or direct rolling in which either a warm steel slab without being fully cooled to room temperature is charged into a heating furnace, or a steel slab undergoes heat retaining for a short period and immediately hot rolled. Further, a steel slab is subjected to rough rolling under normal conditions and formed into a sheet bar. When the heating temperature is low, the sheet bar is preferably heated using a bar heater or the like prior to finish rolling from the viewpoint of preventing troubles during hot rolling.

**Finisher delivery temperature in hot rolling: 800 °C or higher and 1000 °C or lower**

The heated steel slab is hot rolled through rough rolling and finish rolling to form a hot-rolled steel sheet. At this point, when the finisher delivery temperature exceeds 1000 °C, the amount of oxides (scales) generated suddenly increases and the interface between the steel substrate and oxides becomes rough, which tends to impair the surface quality after pickling and cold rolling. In addition, any hot-rolling scales remaining after pickling adversely affect ductility. Further, grain size increases excessively and fatigue properties deteriorate.

On the other hand, if the finisher delivery temperature is below 800 °C, rolling load and burden increase, rolling is performed more often in a state in which recrystallization of austenite does not occur, and an abnormal texture develops. As a result, the final product has a significant planar anisotropy, and not only does the material properties become less uniform, but also the ductility itself deteriorate.

Therefore, the finisher delivery temperature in hot rolling needs to be 800 °C or higher and 1000 °C or lower, and preferably 820 °C or higher and 950 °C or lower.

**Mean coiling temperature after hot rolling: 200 °C or higher and 500 °C or lower**

Setting of mean coiling temperature after the hot rolling is very important for the method according to the disclosure.

Specifically, when the mean coiling temperature after the hot rolling is above 500 °C, ferrite and pearlite form during cooling and retaining processes after the hot rolling. Consequently, it becomes difficult to provide the hot-rolled sheet with a structure in which a single phase structure of martensite, a single phase structure of bainite, or a martensite-bainite mixed structure is dominantly present, making it difficult to impart a desired ductility to the steel sheet obtained after annealing or to balance its strength and ductility. If the mean coiling temperature after the hot rolling is below 200 °C, the hot-rolled steel sheet is degraded in terms of shape, deteriorating productivity. Therefore, the mean coiling temperature after the hot rolling needs to be 200 °C or higher and 500 °C or lower, preferably 300 °C or higher and 450 °C or lower, and more preferably 350 °C or higher and 450 °C or lower.

Finish rolling may be performed continuously by joining rough-rolled sheets during the hot rolling. Rough-rolled sheets may be coiled on a temporary basis. At least part of finish rolling may be conducted as lubrication rolling to reduce rolling load in hot rolling. Conducting lubrication rolling in such a manner is effective from the perspective of making the shape and material properties of a steel sheet uniform. In lubrication rolling, the coefficient of friction is preferably 0.10 or more and 0.25 or less.

The hot-rolled steel sheet thus produced is subjected to pickling. Pickling enables removal of oxides from the steel sheet surface, and is thus important to ensure that the high-strength steel sheet as the final product has good chemical convertibility and a sufficient quality of coating. Pickling may be performed in one or more batches.

**Rolling reduction in cold rolling: less than 30 %**

Additionally, the hot-rolled steel sheet may be subjected to cold rolling to form a cold-rolled steel sheet. When cold rolling is performed, rolling reduction in cold rolling is of great importance.

Specifically, if the rolling reduction is 30 % or more, a low temperature transformation phase is broken in the structure of the hot-rolled sheet. Consequently, it becomes difficult to provide the steel sheet obtained after the annealing with a structure that contains appropriate amounts of ferrite, bainitic ferrite, and retained austenite, and in which fine retained austenite and fine bainitic ferrite are distributed, making it difficult to ensure ductility, balance strength and ductility, or guarantee good fatigue properties. Therefore, the rolling reduction in cold rolling is less than 30 %, preferably 25 % or less, and more preferably 20 % or less. No lower limit is particularly placed on the rolling reduction in cold rolling. It may be greater than 0 %. The number of rolling passes and the rolling reduction per pass are not particularly limited, and the effect of the disclosure may be obtained with any number of rolling passes and any rolling reduction per pass.

**Annealing temperature: 740 °C or higher and 840 °C or lower**

An annealing temperature below 740 °C cannot ensure formation of a sufficient amount of austenite during the annealing. Consequently, a desired amount of retained austenite cannot be obtained in the end, making it difficult to yield good ductility and to balance strength and ductility. On the other hand, an annealing temperature above 840 °C is within a temperature range of austenite single phase, and a desired amount of fine retained austenite cannot be produced in the end, which makes it difficult again to ensure good ductility and to balance strength and ductility.

Therefore, the annealing temperature is 740 °C or higher and 840 °C or lower, and preferably 750 °C or higher and 830 °C or lower.

**Annealing treatment holding time: 10 s or more and 900 s or less**

A annealing treatment holding time shorter than 10 s cannot ensure formation of a sufficient amount of austenite during the annealing. Consequently, a desired amount of retained austenite cannot be obtained in the end, making it difficult to yield good ductility and to balance strength and ductility. On the other hand, an annealing treatment holding time longer than 900 s causes grain coarsening, a desired amount of fine retained austenite cannot be produced in the end, making it difficult to ensure good ductility and to balance strength and ductility. This also inhibits productivity.

Therefore, the annealing treatment holding time is 10 s or more and 900 s or less, preferably 30 s or more and 750 s or less, and more preferably 60 s or more and 600 s or less.

**Mean cooling rate to a cooling stop temperature of higher than 350 °C and 550 °C or lower: 5 °C/s or higher and 50 °C/s or lower**

If the mean cooling rate to a cooling stop temperature of higher than 350 °C and 550 °C or lower is below 5 °C/s, a large amount of ferrite is produced during cooling, making it difficult to guarantee a desired strength. On the other hand, if the mean cooling rate is above 50 °C/s, a low temperature transformation phase forms excessively, degrading ductility.

Therefore, the mean cooling rate to a cooling stop temperature of higher than 350 °C and 550 °C or lower is 5 °C/s or higher and 50 °C/s or lower, and preferably 10 °C/s or higher and 40 °C/s or lower.

The cooling in the annealing is preferably performed by gas cooling; however, furnace cooling, mist cooling, roll cooling, water cooling, and the like can also be employed in combination.

**Holding time in a temperature range of higher than 350 °C to 550 °C: 10 s or more**

If the holding time in a temperature range of higher than 350 °C to 550 °C is shorter than 10 s, there is insufficient time for the concentration of C (carbon) into austenite to progress, making it difficult to ensure a desired amount of retained austenite in the end. Therefore, the holding time in a temperature range of higher than 350 °C to 550 °C is 10 s or more.

However, a holding time longer than 600 s does not increase the volume fraction of retained austenite and ductility does not significantly improve, where the effect reaches a plateau. Therefore, the holding time in a temperature range of higher than 350 °C to 550 °C is preferably 600 s or less, more preferably 30 s or more and 600 s or less, and still more preferably 60 s or more and 500 s or less.

Cooling after the holding is not particularly limited, and any method may be used to implement cooling to a desired temperature.

The steel sheet thus obtained may be subjected to galvanizing treatment such as hot-dip galvanizing.

For example, when hot-dip galvanizing is performed, the above-described steel sheet subjected to the annealing treatment is immersed in a galvanizing bath at 440 °C or higher and 500 °C or lower for hot-dip galvanizing, after which coating weight adjustment is performed using gas wiping or the like. For hot-dip galvanizing, a galvanizing bath with an Al content of 0.10 % or more and 0.22 % or less is preferably used. When a galvanized layer is subjected to alloying treatment, the alloying treatment is performed in a temperature range of 470 °C to 600 °C after hot-dip galvanizing. If alloying treatment is performed at a temperature above 600 °C, untransformed austenite transforms to pearlite, where the presence of a desired volume fraction of retained austenite cannot be ensured and ductility may degrade. Therefore, when a galvanized layer is subjected to alloying treatment, the alloying treatment is preferably performed in a temperature range of 470 °C to 600 °C. Electrogalvanized plating may also be performed.

Moreover, when skin pass rolling is performed after the heat treatment, the skin pass rolling is preferably performed with a rolling reduction of 0.1 % or more and 1.0 % or less. A rolling reduction below 0.1 % provides only a small effect and complicates control, and hence 0.1 % is the lower limit of the favorable range. On the other hand, a rolling reduction above 1.0 % significantly degrades productivity, and thus 1.0 % is the upper limit of the favorable range.

The skin pass rolling may be performed on-line or off-line. Skin pass may be performed in one or more batches with a target rolling reduction. No particular limitations are placed on other manufacturing conditions, yet from the perspective of productivity, the aforementioned series of processes such as annealing, hot-dip galvanizing, and alloying treatment on a galvanized layer are preferably carried out on a CGL (Continuous Galvanizing Line) as the hot-dip galvanizing line. After the hot-dip galvanizing, wiping may be performed for adjusting the coating amounts.

The following describes the microstructure of a steel sheet manufactured by the method according to the disclosure.

**Total area ratio of ferrite and bainitic ferrite: 25 % or more and 80 % or less**

A high-strength steel sheet manufactured by the method according to the disclosure comprises a multi-phase structure in which retained austenite having an influence mainly on ductility and, more preferably, martensite affecting strength are diffused in a structure in which soft ferrite with high ductility is dominantly present. In addition, bainitic ferrite forms adjacent to ferrite and retained austenite/martensite, and reduces the difference in hardness between ferrite and retained austenite and between ferrite and martensite to suppress the occurrence of fatigue cracking and propagation of cracking.

To ensure sufficient ductility, the total area ratio of ferrite and bainitic ferrite needs to be 25 % or more. On the other hand, to secure the desired strength, the total area ratio of ferrite and bainitic ferrite needs to be 80 % or less. For better ductility, the total area ratio of ferrite and bainitic ferrite is preferably 30 % or more and 75 % or less.

Bainitic ferrite, which exhibits a hardness intermediate between those of ferrite and retained austenite/martensite, is effective in ensuring good local ductility since it has the effect of suppressing the occurrence of voids and propagation of cracking during tensile test (upon application of a tensile load). Therefore, the area ratio of bainitic ferrite is preferably 5 % or more. On the other hand, to secure stable strength, the area ratio of bainitic ferrite is preferably 25 % or less.

As used herein, the term "bainitic ferrite" means such ferrite that is produced during the process of annealing at a temperature of 740 °C or higher and 840 °C or lower, followed by cooling to and holding at a temperature of 600 °C or lower, and that has a high dislocation density as compared to normal ferrite.

While the main example of ferrite is acicular ferrite, ferrite may include polygonal ferrite and non-recrystallized ferrite. To ensure good ductility, however, it is preferred that the area ratio of polygonal ferrite is 20 % or less and the area ratio of non-recrystallized ferrite is 5 % or less. The area ratios of polygonal ferrite and of non-recrystallized ferrite may be 0 %.

The area ratios of ferrite and bainitic ferrite can be determined by polishing a cross section of a steel sheet taken in the sheet thickness direction to be parallel to the rolling direction (L-cross section), etching the cross section with 3 vol.% nital, and averaging the results from observing ten locations at 2000 times magnification under an SEM (scanning electron microscope) at a position of sheet thickness x 1/4 (a position at a depth of one-fourth of the sheet thickness from the steel sheet surface) and calculating the area ratios of ferrite and bainitic ferrite for the ten locations with Image-Pro, available from Media Cybernetics, Inc., using the structure micrographs imaged with the SEM.

In the structure micrographs, ferrite and bainitic ferrite appear as a gray structure (base steel structure), while retained austenite and martensite as a white structure.

Identification of ferrite and bainitic ferrite is made by EBSD (Electron Back Scatter Diffraction) measurement. Specifically, a crystal grain (phase) that includes a sub-boundary with a grain boundary angle of smaller than 15° is identified as bainitic ferrite, for which the area ratio is calculated and used as the area ratio of bainitic ferrite. The area ratio of ferrite can be calculated by subtracting the area ratio of bainitic ferrite from the area ratio of the above-described gray structure.

**Volume fraction of retained austenite: 10 % or more**

To ensure good ductility and balance strength and ductility, the volume fraction of retained austenite needs to be 10 % or more. For obtaining better ductility and achieving a better balance between strength and ductility, it is preferred that the volume fraction of retained austenite is 12 % or more. No upper limit is particularly placed on the volume fraction of retained austenite, yet it is around 35 %.

The volume fraction of retained austenite is calculated by determining the x-ray diffraction intensity of a plane of sheet thickness x 1/4, which is exposed by polishing the steel sheet surface to a depth of one-fourth of the sheet thickness. Using an incident x-ray beam of MoKα, the intensity ratio of the peak integrated intensity of the {111}, {200}, {220}, and {311} planes of retained austenite to the peak integrated intensity of the {110}, {200}, and {211} planes of ferrite is calculated for all of the twelve combinations, the results are averaged, and the average is used as the volume fraction of retained austenite.

**Mean grain size of retained austenite: 2 μm or less**

Refinement of retained austenite grains contributes to improving the ductility and fatigue properties of the steel sheet. Accordingly, to ensure good ductility and fatigue properties, retained austenite needs to have a mean grain size of 2 μm or less. For better ductility and fatigue properties, it is preferred that retained austenite has a mean grain size of 1.5 μm or less. No lower limit is particularly placed on the mean grain size, yet it is around 0.1 μm.

The mean grain size of retained austenite can be determined by averaging the results from observing twenty locations at 15000 times magnification under a TEM (transmission electron microscope) and averaging the equivalent circular diameters calculated from the areas of retained austenite grains identified with Image-Pro, as mentioned above, using the structure micrographs imaged with the TEM.

**Mean free path of bainitic ferrite: 3 μm or less**

The mean free path of bainitic ferrite is very important. Specifically, bainitic ferrite forms in the process of cooling to and holding at a temperature of 600 °C or lower following the annealing in a temperature range of 740 °C to 840 °C. In this respect, bainitic ferrite forms adjacent to ferrite and retained austenite, and has the effect of reducing the difference in hardness between ferrite and retained austenite to suppress the occurrence of fatigue cracking and propagation of cracking. It is thus more advantageous if bainitic ferrite is densely distributed, in other words, if bainitic ferrite has a small mean free path.

To ensure good fatigue properties, bainitic ferrite needs to have a mean free path of 3 μm or less. For better fatigue properties, it is preferred that bainitic ferrite has a mean free path of 2.5 μm or less. No lower limit is particularly placed on the mean free path, yet it is around 0.5 μm.

The mean free path ($L_{BF}$) of bainitic ferrite can be calculated by:

$$L_{BF} = \frac{d_{BF}}{2}\left(\frac{4\pi}{3f}\right)^{\frac{1}{3}} - d_{BF}$$

$L_{BF}$: mean free path of bainitic ferrite (μm)
$d_{BF}$: mean grain size of bainitic ferrite (μm)
f: area ratio of bainitic ferrite (%) ÷ 100

The mean grain size of bainitic ferrite can be determined by averaging the areas of grains by dividing the area of bainitic ferrite in the measured region calculated by EBSD measurement by the number of bainitic ferrite grains in the measured region to identify an equivalent circle diameter.

In addition to ferrite and bainitic ferrite and retained austenite, the microstructures according to the disclosure may include carbides such as martensite, tempered martensite, pearlite, cementite, and the like, as well as other microstructures well known as steel sheet microstructures. Any microstructure that has an area ratio of 20 % or less may be used without detracting from the effect of the disclosure.

EXAMPLES

Steels having the chemical compositions presented in Table 1, each with the balance consisting of Fe and incidental impurities, were prepared by steelmaking in a converter and formed into slabs by continuous casting. The steel slabs thus obtained were heated under the conditions presented in Table 2, and subjected to hot rolling, followed by pickling treatment. For Steel Nos. 1, 3-6, 8, 9, 12, 14, 16, 17, 19, 22, 24, 27, 29, 31, 33, 35, 36, 38, 40, 41, 45, 48, 49, 51, 54, and 58 presented in Table 2, cold rolling was not performed, and annealing treatment was conducted under the conditions presented in Table 2 to produce high-strength hot-rolled steel sheets (HR). For Steel Nos. 2, 7, 10, 11, 13, 15, 18, 20, 21, 23, 25, 26, 28, 30, 32, 34, 37, 39, 42-44, 46, 47, 50, 52, 53, 55-57, and 59 presented in Table 2, cold rolling was performed, and annealing treatment was conducted under the conditions presented in Table 2 to produce high-strength cold-rolled steel sheets (CR). Moreover, some were subjected to galvanizing treatment to obtain hot-dip galvanized steel sheets (GI), galvannealed steel sheets (GA), and electrogalvanized steel sheets (EG).

Used as hot-dip galvanizing baths were a zinc bath containing 0.19 mass% of Al for GI and a zinc bath containing 0.14 mass% of Al for GA, in each case the bath temperature was 465 °C. The coating weight per side was 45 g/m$^2$ (in the case of both-sided coating), and the Fe concentration in the coated layer of each hot-dip galvannealed steel sheet (GA) was 9 mass% or more and 12 mass% or less.

The Ac$_1$ transformation temperature (°C) presented in Table 1 was calculated by:

$$\text{Ac}_1 \text{ transformation temperature } (°C) = 751 - 16 \times (\%C) + 11 \times (\%Si) - 28 \times (\%Mn) - 5.5 \times (\%Cu) + 13 \times (\%Cr)$$

Where (%X) represents content (in mass%) of an element X in steel.

Table 1

**Table 1**

| Steel ID | Chemical composition (mass%) | | | | | | | | | | | | | | | | | | Ac₁ transformation temperature (°C) | Remarks |
|---|---|---|---|---|---|---|---|---|---|---|---|---|---|---|---|---|---|---|---|---|
| | C | Si | Mn | P | S | N | B | Ti | Al | Nb | Cr | Cu | Sb | Sn | Ta | Ca | Mg | REM | | |
| A | 0.112 | 1.62 | 2.38 | 0.021 | 0.0020 | 0.0032 | - | - | - | - | - | - | - | - | - | - | - | - | 700 | Conforming steel |
| B | 0.182 | 1.24 | 2.11 | 0.019 | 0.0019 | 0.0030 | - | - | - | - | - | - | - | - | - | - | - | - | 703 | Conforming steel |
| C | 0.211 | 1.28 | 2.49 | 0.014 | 0.0018 | 0.0032 | - | - | - | - | - | - | - | - | - | - | - | - | 705 | Conforming steel |
| D | 0.232 | 0.73 | 2.34 | 0.025 | 0.0022 | 0.0030 | - | - | - | - | - | - | - | - | - | - | - | - | 690 | Conforming steel |
| E | 0.224 | 1.02 | 2.01 | 0.029 | 0.0016 | 0.0032 | - | - | - | - | - | - | - | - | - | - | - | - | 702 | Conforming steel |
| F | 0.218 | 1.48 | 2.18 | 0.016 | 0.0024 | 0.0033 | - | - | - | - | - | - | - | - | - | - | - | - | 709 | Conforming steel |
| G | 0.228 | 1.55 | 2.16 | 0.018 | 0.0019 | 0.0034 | - | - | - | - | - | - | - | - | - | - | - | - | 704 | Conforming steel |
| H | 0.200 | 1.48 | 2.34 | 0.022 | 0.0021 | 0.0030 | - | - | - | - | - | - | - | - | - | - | - | - | 699 | Conforming steel |
| I | 0.182 | 1.39 | 2.86 | 0.028 | 0.0019 | 0.0029 | - | - | - | - | - | - | - | - | - | - | - | - | 683 | Conforming steel |
| J | <u>0.064</u> | 1.51 | 2.89 | 0.027 | 0.0018 | 0.0028 | - | - | - | - | - | - | - | - | - | - | - | - | 686 | Comparative steel |
| K | 0.232 | <u>0.24</u> | 2.78 | 0.023 | 0.0021 | 0.0030 | - | - | - | - | - | - | - | - | - | - | - | - | 672 | Comparative steel |
| L | 0.213 | 1.43 | <u>1.72</u> | 0.028 | 0.0028 | 0.0028 | - | - | - | - | - | - | - | - | - | - | - | - | 715 | Comparative steel |
| M | 0.202 | 1.34 | 2.22 | 0.018 | 0.0024 | 0.0034 | - | - | 0.380 | - | - | - | - | - | - | - | - | - | 700 | Conforming steel |
| N | 0.198 | 1.22 | 2.18 | 0.031 | 0.0022 | 0.0031 | - | 0.034 | - | - | - | - | - | - | - | - | - | - | 707 | Conforming steel |
| O | 0.188 | 1.24 | 2.35 | 0.016 | 0.0026 | 0.0032 | - | - | - | 0.041 | - | - | - | - | - | - | - | - | 709 | Conforming steel |
| P | 0.234 | 1.48 | 2.24 | 0.028 | 0.0018 | 0.0030 | - | - | - | - | 0.22 | - | - | - | - | - | - | - | 712 | Conforming steel |
| Q | 0.203 | 1.46 | 2.21 | 0.015 | 0.0024 | 0.0029 | - | - | - | - | - | 0.25 | - | - | - | - | - | - | 701 | Conforming steel |
| R | 0.221 | 1.49 | 2.18 | 0.024 | 0.0019 | 0.0033 | - | - | - | - | - | - | 0.0051 | - | - | - | - | - | 703 | Conforming steel |
| S | 0.187 | 1.56 | 2.32 | 0.019 | 0.0028 | 0.0034 | - | - | - | - | - | - | - | 0.0046 | - | - | - | - | 710 | Conforming steel |
| T | 0.189 | 1.45 | 2.25 | 0.024 | 0.0018 | 0.0029 | - | - | - | - | - | - | - | - | 0.0039 | - | - | - | 707 | Conforming steel |
| U | 0.199 | 1.32 | 2.09 | 0.025 | 0.0017 | 0.0044 | - | - | - | 0.041 | - | - | 0.0060 | - | - | - | - | - | 704 | Conforming steel |
| V | 0.202 | 1.38 | 2.12 | 0.018 | 0.0026 | 0.0036 | - | - | - | 0.020 | - | - | - | 0.0062 | - | - | - | - | 704 | Conforming steel |
| W | 0.211 | 1.46 | 2.28 | 0.028 | 0.0025 | 0.0042 | - | - | - | 0.034 | - | - | - | - | 0.0055 | - | - | - | 709 | Conforming steel |
| X | 0.213 | 1.24 | 2.19 | 0.019 | 0.0022 | 0.0044 | - | - | - | - | - | - | - | - | - | 0.0024 | - | - | 707 | Conforming steel |
| Y | 0.197 | 1.44 | 2.21 | 0.024 | 0.0019 | 0.0036 | - | - | - | - | - | - | - | - | - | - | 0.0016 | - | 702 | Conforming steel |
| Z | 0.198 | 1.63 | 2.31 | 0.020 | 0.0017 | 0.0032 | - | - | - | - | - | - | - | - | - | - | - | 0.0020 | 707 | Conforming steel |

Underlined if outside of the appropriate range.

**Table 1 (cont'd)**

| Steel ID | Chemical composition (mass%) | | | | | | | | | | | | | | | | | | Ac₁ transformation temperature (°C) | Remarks |
|---|---|---|---|---|---|---|---|---|---|---|---|---|---|---|---|---|---|---|---|---|
| | C | Si | Mn | P | S | N | B | Ti | Al | Nb | Cr | Cu | Sb | Sn | Ta | Ca | Mg | REM | | |
| AA | 0.189 | 1.37 | 2.21 | 0.010 | 0.0014 | 0.0038 | 0.0021 | 0.022 | - | - | - | - | - | - | - | - | - | - | 701 | Conforming steel |
| AB | 0.231 | 1.19 | 2.18 | 0.018 | 0.0015 | 0.0040 | 0.0015 | 0.018 | - | - | - | - | - | - | - | - | - | - | 699 | Conforming steel |
| AC | 0.171 | 1.52 | 2.62 | 0.012 | 0.0020 | 0.0033 | 0.0018 | 0.030 | - | - | - | - | - | - | - | - | - | - | 692 | Conforming steel |
| AD | 0.150 | 0.92 | 2.89 | 0.019 | 0.0018 | 0.0028 | 0.0032 | 0.023 | - | - | - | - | - | - | - | - | - | - | 678 | Conforming steel |
| AE | 0.121 | 1.48 | 2.31 | 0.021 | 0.0024 | 0.0041 | 0.0028 | 0.019 | - | - | - | - | - | - | - | - | - | - | 701 | Conforming steel |
| AF | 0.113 | 1.24 | 2.15 | 0.019 | 0.0033 | 0.0041 | - | - | - | - | - | - | - | - | - | - | - | - | 703 | Conforming steel |
| AG | 0.118 | 1.30 | 2.86 | 0.018 | 0.0026 | 0.0037 | 0.0023 | 0.018 | - | - | - | - | - | - | - | - | - | - | 683 | Conforming steel |
| AH | 0.114 | 0.88 | 2.12 | 0.022 | 0.0044 | 0.0038 | - | - | - | - | - | - | - | - | - | - | - | - | 699 | Conforming steel |
| AI | 0.123 | 0.93 | 2.83 | 0.016 | 0.0021 | 0.0043 | 0.0020 | 0.032 | - | - | - | - | - | - | - | - | - | - | 680 | Conforming steel |
| AJ | 0.122 | 2.39 | 2.89 | 0.023 | 0.0019 | 0.0036 | - | - | - | - | - | - | - | - | - | - | - | - | 694 | Conforming steel |
| AK | 0.311 | 1.42 | 2.10 | 0.016 | 0.0028 | 0.0032 | 0.0013 | 0.024 | - | - | - | - | - | - | - | - | - | - | 703 | Conforming steel |
| AL | 0.293 | 1.44 | 2.41 | 0.022 | 0.0052 | 0.0053 | - | - | - | - | - | - | - | - | - | - | - | - | 695 | Conforming steel |
| AM | 0.296 | 1.42 | 2.69 | 0.021 | 0.0048 | 0.0034 | 0.0032 | 0.019 | - | - | - | - | - | - | - | - | - | - | 687 | Conforming steel |
| AN | 0.129 | 1.35 | 2.38 | 0.019 | 0.0031 | 0.0037 | 0.0019 | 0.065 | - | - | - | - | - | - | - | - | - | - | 697 | Conforming steel |
| AO | 0.178 | 1.41 | 2.79 | 0.007 | 0.0020 | 0.0036 | - | - | - | - | - | - | - | - | - | - | - | - | 686 | Conforming steel |
| AP | 0.194 | 1.48 | 2.68 | 0.015 | 0.0008 | 0.0042 | 0.0025 | 0.020 | - | - | - | - | - | - | - | - | - | - | 689 | Conforming steel |
| AQ | 0.223 | 1.35 | 2.47 | 0.006 | 0.0005 | 0.0039 | - | - | - | - | - | - | - | - | - | - | - | - | 693 | Conforming steel |

Underlined if outside of the appropriate range.

Table 1 (cont'd)

EP 3 187 601 B1

14

Table 2

**Table 2**

| No. | Steel ID | Slab heating temp. (°C) | Hot-rolling conditions | | Cold-rolling conditions | Annealing treatment conditions | | | | | Type* | Remarks |
|---|---|---|---|---|---|---|---|---|---|---|---|---|
| | | | Finisher delivery temp. (°C) | Mean coiling temp. (°C) | Rolling reduction (%) | Annealing temp. (°C) | Annealing holding time (s) | Mean cooling rate (°C/s) | Cooling stop temp. (°C) | Holding time in temp. range of higher than 350 °C to 550 °C (s) | | |
| 1 | A | 1250 | 910 | 400 | cold rolling not performed | 770 | 120 | 17 | 410 | 190 | HR | Example |
| 2 | B | 1260 | 890 | 440 | 13.0 | 790 | 150 | 20 | 420 | 340 | GI | Example |
| 3 | C | 1230 | 870 | 410 | cold rolling not performed | 780 | 140 | 22 | 450 | 210 | HR | Example |
| 4 | C | 890 | 900 | 400 | cold rolling not performed | 810 | 200 | 15 | 390 | 150 | HR | Comparative example |
| 5 | C | 1420 | 910 | 420 | cold rolling not performed | 800 | 240 | 16 | 510 | 130 | HR | Comparative example |
| 6 | C | 1220 | 640 | 380 | cold rolling not performed | 810 | 280 | 17 | 430 | 210 | HR | Comparative example |
| 7 | C | 1230 | 1120 | 490 | 6.0 | 800 | 180 | 17 | 410 | 290 | CR | Comparative example |
| 8 | C | 1240 | 910 | 120 | cold rolling not performed | 790 | 300 | 18 | 450 | 210 | GI | Comparative example |
| 9 | C | 1260 | 890 | 630 | cold rolling not performed | 790 | 250 | 22 | 460 | 230 | HR | Comparative example |

(continued)

| No. | Steel ID | Slab heating temp. (°C) | Hot-rolling conditions | | Cold-rolling conditions | Annealing treatment conditions | | | | | Type* | Remarks |
|---|---|---|---|---|---|---|---|---|---|---|---|---|
| | | | Finisher delivery temp. (°C) | Mean coiling temp. (°C) | Rolling reduction (%) | Annealing temp. (°C) | Annealing holding time (s) | Mean cooling rate (°C/s) | Cooling stop temp. (°C) | Holding time in temp. range of higher than 350 °C to 550 °C (s) | | |
| 10 | C | 1230 | 900 | 420 | 46.2 | 820 | 200 | 17 | 490 | 240 | CR | Comparative example |
| 11 | C | 1230 | 920 | 450 | 13.0 | 660 | 280 | 15 | 420 | 180 | EG | Comparative example |
| 12 | C | 1220 | 860 | 470 | cold rolling not performed | 900 | 100 | 16 | 410 | 210 | HR | Comparative example |
| 13 | C | 1240 | 870 | 460 | 5.3 | 780 | 5 | 17 | 390 | 290 | CR | Comparative example |
| 14 | C | 1250 | 900 | 480 | cold rolling not performed | 790 | 1200 | 17 | 410 | 260 | HR | Comparative example |
| 15 | C | 1260 | 910 | 500 | 8.7 | 800 | 180 | 72 | 420 | 190 | EG | Comparative example |
| 16 | C | 1250 | 900 | 480 | cold rolling not performed | 810 | 220 | 24 | 240 | 8 | GI | Comparative example |
| 17 | C | 1230 | 860 | 460 | cold rolling not performed | 800 | 240 | 15 | 670 | - | HR | Comparative example |
| 18 | C | 1230 | 890 | 400 | 8.0 | 810 | 300 | 18 | 400 | 8 | GA | Comparative example |
| 19 | C | 1240 | 880 | 450 | cold rolling not performed | 790 | 180 | 20 | 410 | 950 | GI | Example |
| 20 | D | 1220 | 890 | 460 | 11.1 | 770 | 180 | 24 | 480 | 480 | CR | Example |

| No. | Steel ID | Slab heating temp. (°C) | Hot-rolling conditions | | Cold-rolling conditions | Annealing treatment conditions | | | | | Type* | Remarks |
|---|---|---|---|---|---|---|---|---|---|---|---|---|
| | | | Finisher delivery temp. (°C) | Mean coiling temp. (°C) | Rolling reduction (%) | Annealing temp. (°C) | Annealing holding time (s) | Mean cooling rate (°C/s) | Cooling stop temp. (°C) | Holding time in temp. range of higher than 350 °C to 550 °C (s) | | |
| 21 | E | 1230 | 900 | 420 | 11.1 | 790 | 200 | 24 | 500 | 260 | CR | Example |
| 22 | F | 1240 | 910 | 480 | cold rolling not performed | 760 | 240 | 22 | 400 | 270 | GA | Example |
| 23 | G | 1230 | 880 | 500 | 6.3 | 790 | 190 | 20 | 450 | 190 | CR | Example |
| 24 | H | 1220 | 860 | 470 | cold rolling not performed | 760 | 150 | 22 | 480 | 170 | EG | Example |
| 25 | I | 1210 | 880 | 490 | 8.7 | 820 | 100 | 19 | 380 | 150 | CR | Example |
| 26 | J | 1200 | 860 | 500 | 8.0 | 760 | 180 | 22 | 400 | 190 | CR | Comparative example |
| 27 | K | 1230 | 890 | 470 | cold rolling not performed | 820 | 150 | 17 | 410 | 510 | EG | Comparative example |
| 28 | L | 1230 | 890 | 460 | 4.3 | 800 | 170 | 16 | 420 | 200 | CR | Comparative example |
| 29 | M | 1250 | 900 | 420 | cold rolling not performed | 820 | 200 | 18 | 460 | 450 | GI | Example |
| 30 | N | 1240 | 890 | 450 | 5.3 | 750 | 90 | 16 | 400 | 510 | CR | Example |
| 31 | O | 1240 | 880 | 460 | cold rolling not performed | 780 | 120 | 27 | 480 | 180 | HR | Example |
| 32 | P | 1250 | 860 | 400 | 5.6 | 790 | 180 | 26 | 450 | 520 | CR | Example |

| No. | Steel ID | Slab heating temp. (°C) | Hot-rolling conditions | | Cold-rolling conditions | Annealing treatment conditions | | | | | Type* | Remarks |
|---|---|---|---|---|---|---|---|---|---|---|---|---|
| | | | Finisher delivery temp. (°C) | Mean coiling temp. (°C) | Rolling reduction (%) | Annealing temp. (°C) | Annealing holding time (s) | Mean cooling rate (°C/s) | Cooling stop temp. (°C) | Holding time in temp. range of higher than 350 °C to 550 °C (s) | | |
| 33 | Q | 1230 | 890 | 440 | cold rolling not performed | 800 | 80 | 17 | 420 | 400 | EG | Example |
| 34 | R | 1220 | 860 | 400 | 5.3 | 800 | 160 | 28 | 410 | 180 | GA | Example |
| 35 | S | 1230 | 910 | 380 | cold rolling not performed | 790 | 200 | 17 | 510 | 190 | GI | Example |
| 36 | T | 1220 | 880 | 410 | cold rolling not performed | 810 | 240 | 17 | 420 | 380 | EG | Example |
| 37 | U | 1230 | 880 | 400 | 5.3 | 790 | 160 | 16 | 430 | 540 | GI | Example |
| 38 | V | 1240 | 890 | 420 | cold rolling not performed | 800 | 280 | 15 | 480 | 250 | HR | Example |
| 39 | W | 1220 | 880 | 400 | 8.0 | 780 | 200 | 16 | 510 | 180 | EG | Example |
| 40 | X | 1230 | 910 | 350 | cold rolling not performed | 810 | 90 | 22 | 430 | 200 | HR | Example |
| 41 | Y | 1230 | 870 | 380 | cold rolling not performed | 770 | 150 | 20 | 410 | 180 | GI | Example |
| 42 | Z | 1210 | 860 | 400 | 5.3 | 800 | 200 | 20 | 420 | 190 | CR | Example |
| 43 | AA | 1240 | 900 | 450 | 14.3 | 800 | 180 | 14 | 400 | 200 | CR | Example |
| 44 | AB | 1250 | 880 | 450 | 13.0 | 780 | 200 | 15 | 420 | 180 | GA | Example |

EP 3 187 601 B1

| No. | Steel ID | Slab heating temp. (°C) | Hot-rolling conditions | | Cold-rolling conditions | Annealing treatment conditions | | | | | Type* | Remarks |
|---|---|---|---|---|---|---|---|---|---|---|---|---|
| | | | Finisher delivery temp. (°C) | Mean coiling temp. (°C) | Rolling reduction (%) | Annealing temp. (°C) | Annealing holding time (s) | Mean cooling rate (°C/s) | Cooling stop temp. (°C) | Holding time in temp. range of higher than 350 °C to 550 °C (s) | | |
| 45 | AC | 1220 | 910 | 490 | cold rolling not performed | 790 | 250 | 13 | 420 | 350 | HR | Example |
| 46 | AD | 1230 | 870 | 480 | 13.0 | 800 | 150 | 16 | 390 | 250 | GI | Example |
| 47 | AE | 1240 | 890 | 400 | 11.1 | 820 | 200 | 18 | 400 | 200 | CR | Example |
| 48 | AF | 1250 | 900 | 450 | cold rolling not performed | 760 | 300 | 20 | 420 | 180 | HR | Example |
| 49 | AG | 1230 | 890 | 420 | cold rolling not performed | 820 | 200 | 18 | 400 | 150 | HR | Example |
| 50 | AH | 1200 | 870 | 400 | 6.7 | 760 | 240 | 19 | 390 | 200 | CR | Example |
| 51 | AI | 1230 | 900 | 350 | cold rolling not performed | 820 | 250 | 22 | 420 | 150 | HR | Example |
| 52 | AJ | 1240 | 860 | 450 | 18.8 | 800 | 150 | 17 | 430 | 190 | EG | Example |
| 53 | AK | 1220 | 870 | 430 | 6.3 | 820 | 100 | 16 | 420 | 520 | CR | Example |
| 54 | AL | 1240 | 900 | 420 | cold rolling not performed | 750 | 190 | 18 | 450 | 300 | HR | Example |
| 55 | AM | 1230 | 910 | 460 | 7.7 | 780 | 150 | 16 | 430 | 450 | GA | Example |
| 56 | AN | 1220 | 900 | 400 | 12.5 | 790 | 300 | 22 | 490 | 430 | CR | Example |
| 57 | AO | 1200 | 860 | 390 | 6.7 | 820 | 90 | 26 | 450 | 190 | GI | Example |

EP 3 187 601 B1

| No. | Steel ID | Slab heating temp. (°C) | Hot-rolling conditions | | Cold-rolling conditions | Annealing treatment conditions | | | | | Type* | Remarks |
|---|---|---|---|---|---|---|---|---|---|---|---|---|
| | | | Finisher delivery temp. (°C) | Mean coiling temp. (°C) | Rolling reduction (%) | Annealing temp. (°C) | Annealing holding time (s) | Mean cooling rate (°C/s) | Cooling stop temp. (°C) | Holding time in temp. range of higher than 350 °C to 550 °C (s) | | |
| 58 | AP | 1230 | 870 | 420 | cold rolling not performed | 800 | 100 | 17 | 390 | 410 | HR | Example |
| 59 | AQ | 1250 | 910 | 410 | 6.7 | 820 | 120 | 16 | 380 | 350 | CR | Example |

Underlined if outside of the appropriate range.
* HR: Hot-rolled steel sheets (uncoated), CR: Cold-rolled steel sheets (uncoated),
GI: hot-dip galvanized steel sheets (alloying treatment not performed on galvanized layers), GA: galvannealed steel sheets, EG: electrogalvanized steel sheets

The high-strength hot-rolled steel sheets (HR), high-strength cold-rolled steel sheets (CR), hot-dip galvanizing steel sheets (GI), galvannealed steel sheets (GA), and electrogalvanized steel sheets (EG) thus obtained were subjected to structure observation, tensile test, and fatigue test. In this case, tensile test was performed in accordance with JIS Z 2241 (2011) to measure TS (tensile strength) and EL (total elongation), using JIS No. 5 test pieces that were sampled such that the longitudinal direction of each test piece coincides with a direction perpendicular to the rolling direction of the steel sheet (the C direction).

In this case, TS and EL were determined to be good when EL $\geq$ 34 % for TS 780 MPa grade, EL $\geq$ 27 % for TS 980 MPa grade, and EL $\geq$ 23 % for TS 1180 MPa grade, and TS $\times$ EL $\geq$ 27000 MPa·%.

Moreover, in fatigue test, sampling was performed such that the longitudinal direction of each fatigue test piece coincides with a direction perpendicular to the rolling direction of the steel sheet, and plane bending fatigue test was conducted under the completely reversed (stress ratio: -1) condition and at the frequency of 20 Hz in accordance with JIS Z 2275 (1978). In the completely reversed plane bending fatigue test, the stress at which no fracture was observed after $10^7$ cycles was measured and used as fatigue limit strength.

Fatigue limit strength was divided by tensile strength TS to calculate a fatigue ratio. In this case, the fatigue property was determined to be good when fatigue limit strength $\geq$ 400 MPa and fatigue ratio $\geq$ 0.40.

Additionally, during the manufacture of steel sheets, measurements were made of productivity, sheet passage ability during hot rolling and cold rolling, and surface characteristics of each steel sheet obtained after final annealing (hereinafter also referred to as a "final-annealed sheet").

In this case, productivity was evaluated according to the lead time costs, including:

(1) malformation of a hot-rolled steel sheet occurred;
(2) a hot-rolled steel sheet requires straightening before proceeding to the subsequent steps;
(3) a prolonged annealing treatment holding time; and
(4) a prolonged austemper holding time (a prolonged holding time in a cooling stop temperature range in annealing treatment).

The productivity was determined to be "high" when none of (1) to (4) applied, "middle" when only (4) applied, and "low" when any of (1) to (3) applied.

The sheet passage ability during hot rolling was determined to be low when the risk of trouble during rolling increased with increasing rolling load. Similarly, the sheet passage ability during cold rolling was determined to be low when the risk of trouble during rolling increased with increasing rolling load.

Furthermore, the surface characteristics of each final-annealed sheet were determined to be poor when defects such as blow hole generation and segregation on the surface layer of the slab could not be scaled-off, cracks and irregularities on the steel sheet surface increased, and a smooth steel sheet surface could not be obtained. The surface characteristics were also determined to be poor when the amount of oxides (scales) generated suddenly increased, the interface between the steel substrate and oxides was roughened, and the surface quality after pickling and cold rolling degraded, or when some hot-rolling scales remained after pickling.

Structure observation was performed following the above-described procedure.

The evaluation results are shown in Tables 3 and 4.

Table 3

**Table 3**

| No. | Steel ID | Sheet thickness (mm) | Steel structure | | | | | Remarks |
|---|---|---|---|---|---|---|---|---|
| | | | Area ratio of F + BF (%) | Volume fraction of RA (%) | Mean grain size of RA ($\mu$m) | Mean free path of BF ($\mu$m) | Balance structure | |
| 1 | A | 2.3 | 75.8 | 14.9 | 0.6 | 1.8 | M+TM+P+$\theta$ | Example |
| 2 | B | 2.0 | 73.4 | 17.8 | 0.7 | 1.7 | M+TM+P+$\theta$ | Example |
| 3 | C | 2.3 | 72.8 | 19.2 | 0.7 | 2.0 | M+TM+P+$\theta$ | Example |
| 4 | C | 2.9 | 68.6 | 17.1 | 1.4 | 2.1 | M+TM+P+$\theta$ | Comparative example |

| No. | Steel ID | Sheet thickness (mm) | Steel structure | | | | | | Remarks |
| | | | Area ratio of F + BF (%) | Volume fraction of RA (%) | Mean grain size of RA (μm) | Mean free path of BF (μm) | Balance structure | | |
|---|---|---|---|---|---|---|---|---|---|
| 5 | C | 2.5 | 67.2 | 16.8 | 1.3 | 2.4 | M+TM+P+θ | | Comparative example |
| 6 | C | 2.5 | 64.2 | 8.1 | 0.6 | 5.6 | M+TM+P+θ | | Comparative example |
| 7 | C | 2.3 | 70.7 | 12.5 | 2.9 | 2.2 | M+TM+P+θ | | Comparative example |
| 8 | C | 1.9 | 69.9 | 15.4 | 1.4 | 2.4 | M+TM+P+θ | | Comparative example |
| 9 | C | 1.4 | 75.6 | 3.8 | 0.5 | 2.5 | M+TM+P+θ | | Comparative example |
| 10 | C | 1.4 | 71.9 | 8.9 | 3.8 | 5.2 | M+TM+P+θ | | Comparative example |
| 11 | C | 2.0 | 69.2 | 5.7 | 3.0 | 2.6 | M+TM+P+θ | | Comparative example |
| 12 | C | 2.1 | 71.4 | 13.4 | 3.1 | 2.7 | M+TM+P+θ | | Comparative example |
| 13 | C | 1.8 | 72.6 | 6.7 | 3.4 | 2.4 | M+TM+P+θ | | Comparative example |
| 14 | C | 1.7 | 84.6 | 3.2 | 1.6 | 2.1 | M+TM+P+θ | | Comparative example |
| 15 | C | 2.1 | 23.9 | 11.0 | 1.7 | 2.2 | M+TM+P+θ | | Comparative example |
| 16 | C | 1.7 | 68.1 | 3.3 | 3.4 | 2.2 | M+TM+P+θ | | Comparative example |
| 17 | C | 2.3 | 69.6 | 2.9 | 0.5 | 2.3 | M+TM+P+θ | | Comparative example |
| 18 | C | 2.3 | 68.7 | 3.9 | 0.6 | 2.4 | M+TM+P+θ | | Comparative example |
| 19 | C | 1.9 | 71.6 | 16.4 | 0.8 | 2.5 | M+TM+P+θ | | Example |
| 20 | D | 1.6 | 64.9 | 20.5 | 1.1 | 1.9 | M+TM+P+θ | | Example |
| 21 | E | 1.6 | 71.6 | 18.4 | 1.2 | 1.8 | M+TM+P+θ | | Example |
| 22 | F | 1.9 | 72.4 | 17.9 | 0.9 | 1.7 | M+TM+P+θ | | Example |
| 23 | G | 1.5 | 73.4 | 19.4 | 0.7 | 1.9 | M+TM+P+θ | | Example |
| 24 | H | 1.8 | 71.5 | 19.8 | 0.9 | 1.5 | M+TM+P+θ | | Example |
| 25 | I | 2.1 | 60.2 | 24.6 | 0.8 | 2.0 | M+TM+P+θ | | Example |
| 26 | J | 2.3 | 73.3 | 2.1 | 0.3 | 2.3 | M+TM+P+θ | | Comparative example |
| 27 | K | 2.5 | 63.4 | 3.5 | 0.6 | 2.1 | M+TM+P+θ | | Comparative example |

(continued)

| No. | Steel ID | Sheet thickness (mm) | Steel structure | | | | | | Remarks |
|---|---|---|---|---|---|---|---|---|---|
| | | | Area ratio of F + BF (%) | Volume fraction of RA (%) | Mean grain size of RA (µm) | Mean free path of BF (µm) | Balance structure | | |
| 28 | L | 2.2 | 66.7 | 4.6 | 0.7 | 2.4 | M+TM+P+θ | | Comparative example |
| 29 | M | 2.5 | 70.4 | 20.1 | 0.7 | 1.7 | M+TM+P+θ | | Example |
| 30 | N | 1.8 | 71.5 | 18.9 | 0.9 | 1.5 | M+TM+P+θ | | Example |
| 31 | O | 1.7 | 69.4 | 19.8 | 1.1 | 1.2 | M+TM+P+θ | | Example |
| 32 | P | 1.7 | 72.7 | 18.4 | 0.9 | 1.6 | M+TM+P+θ | | Example |
| 33 | Q | 2.4 | 69.5 | 18.4 | 1.0 | 1.1 | M+TM+P+θ | | Example |
| 34 | R | 1.8 | 73.2 | 18.1 | 0.7 | 1.8 | M+TM+P+θ | | Example |
| 35 | S | 2.7 | 76.7 | 15.1 | 0.6 | 2.0 | M+TM+P+θ | | Example |
| 36 | T | 2.5 | 74.7 | 17.1 | 0.5 | 1.2 | M+TM+P+θ | | Example |
| 37 | U | 1.8 | 72.6 | 18.4 | 0.7 | 1.5 | M+TM+P+θ | | Example |
| 38 | V | 2.5 | 70.4 | 19.5 | 0.5 | 1.8 | M+TM+P+θ | | Example |
| 39 | W | 2.3 | 68.0 | 22.0 | 0.6 | 1.1 | M+TM+P+θ | | Example |
| 40 | X | 1.9 | 73.4 | 18.6 | 0.7 | 0.9 | M+TM+P+θ | | Example |
| 41 | Y | 2.5 | 71.1 | 19.8 | 0.9 | 1.5 | M+TM+P+θ | | Example |
| 42 | Z | 1.8 | 72.4 | 19.5 | 0.9 | 1.6 | M+TM+P+θ | | Example |
| 43 | AA | 1.8 | 71.4 | 16.7 | 0.7 | 1.9 | M+TM+P+θ | | Example |
| 44 | AB | 2.0 | 70.6 | 15.8 | 0.8 | 1.8 | M+TM+P+θ | | Example |
| 45 | AC | 2.3 | 69.1 | 19.1 | 0.9 | 2.0 | M+TM+P+θ | | Example |
| 46 | AD | 2.0 | 68.8 | 18.4 | 0.8 | 1.7 | M+TM+P+θ | | Example |
| 47 | AE | 1.6 | 74.8 | 13.2 | 0.6 | 1.6 | M+TM+P+θ | | Example |
| 48 | AF | 2.0 | 74.2 | 12.8 | 1.3 | 2.1 | M+TM+P+θ | | Example |
| 49 | AG | 1.8 | 68.9 | 13.3 | 1.4 | 1.9 | M+TM+P+θ | | Example |
| 50 | AH | 1.4 | 70.1 | 11.3 | 1.0 | 2.1 | M+TM+P+θ | | Example |
| 51 | AI | 1.8 | 67.5 | 13.7 | 0.9 | 2.0 | M+TM+P+θ | | Example |
| 52 | AJ | 1.3 | 67.6 | 16.1 | 0.7 | 2.2 | M+TM+P+θ | | Example |
| 53 | AK | 1.5 | 67.9 | 21.1 | 0.7 | 2.1 | M+TM+P+θ | | Example |
| 54 | AL | 2.0 | 66.9 | 22.5 | 0.9 | 2.3 | M+TM+P+θ | | Example |
| 55 | AM | 1.2 | 61.7 | 23.5 | 0.9 | 1.9 | M+TM+P+θ | | Example |
| 56 | AN | 1.4 | 69.1 | 18.3 | 0.7 | 2.1 | M+TM+P+θ | | Example |
| 57 | AO | 1.4 | 66.3 | 21.3 | 0.8 | 2.2 | M+TM+P+θ | | Example |
| 58 | AP | 1.8 | 64.9 | 22.1 | 1.0 | 1.9 | M+TM+P+θ | | Example |

(continued)

| No. | Steel ID | Sheet thickness (mm) | Steel structure | | | | | Remarks |
|---|---|---|---|---|---|---|---|---|
| | | | Area ratio of F + BF (%) | Volume fraction of RA (%) | Mean grain size of RA (μm) | Mean free path of BF (μm) | Balance structure | |
| 59 | AQ | 1.4 | 62.7 | 24.9 | 1.1 | 2.4 | M+TM+P+θ | Example |

Underlined if outside of the appropriate range.
F: ferrite, BF: bainitic ferrite, RA: retained austenite, M: martensite,
TM: tempered martensite, P: pearlite, θ: cementite

Table 4

Table 4

| No. | Tensile test results | | | Fatigue test results | | Productivity | Sheet passage ability during hot rolling | Sheet passage ability during cold rolling | Surface characteristics of final-annealed sheet | Remarks |
|---|---|---|---|---|---|---|---|---|---|---|
| | TS (MPa) | EL (%) | TS x EL (MPa·%) | Fatigue limit strength (MPa) | Fatigue ratio | | | | | |
| 1 | 794 | 40.1 | 31839 | 450 | 0.57 | High | High | - | Good | Example |
| 2 | 910 | 37.1 | 33761 | 460 | 0.51 | High | High | High | Good | Example |
| 3 | 1008 | 33.5 | 33768 | 470 | 0.47 | High | High | - | Good | Example |
| 4 | 1028 | 27.8 | 28578 | 410 | 0.40 | Low | Low | - | Fairly poor | Comparative example |
| 5 | 1034 | 27.2 | 28125 | 410 | 0.40 | Low | Low | - | Fairly poor | Comparative example |
| 6 | 1235 | 12.4 | 15314 | 500 | 0.40 | Low | Low | - | Fairly poor | Comparative example |
| 7 | 1012 | 18.9 | 19127 | 410 | 0.41 | Low | High | Low | Poor | Comparative example |
| 8 | 942 | 28.1 | 26470 | 400 | 0.42 | Low | High | - | Good | Comparative example |
| 9 | 679 | 34.1 | 23154 | 280 | 0.41 | High | High | - | Good | Comparative example |
| 10 | 1044 | 15.8 | 16495 | 290 | 0.28 | High | High | High | Good | Comparative example |
| 11 | 1189 | 16.2 | 19262 | 480 | 0.40 | High | High | High | Good | Comparative example |
| 12 | 1022 | 18.4 | 18805 | 410 | 0.40 | Low | High | - | Good | Comparative example |
| 13 | 1279 | 14.8 | 18929 | 520 | 0.41 | High | High | High | Good | Comparative example |
| 14 | 682 | 26.9 | 18346 | 290 | 0.43 | Low | High | - | Good | Comparative example |

EP 3 187 601 B1

26

| No. | Tensile test results | | | Fatigue test results | | Productivity | Sheet passage ability during hot rolling | Sheet passage ability during cold rolling | Surface characteristics of final-annealed sheet | Remarks |
|---|---|---|---|---|---|---|---|---|---|---|
| | TS (MPa) | EL (%) | TS x EL (MPa·%) | Fatigue limit strength (MPa) | Fatigue ratio | | | | | |
| 15 | 1189 | 15.8 | 18786 | 490 | 0.41 | High | High | High | Good | Comparative example |
| 16 | 1089 | 16.7 | 18186 | 440 | 0.40 | High | High | - | Good | Comparative example |
| 17 | 1192 | 15.8 | 18834 | 480 | 0.40 | High | High | - | Good | Comparative example |
| 18 | 1198 | 14.9 | 17850 | 490 | 0.41 | High | High | High | Good | Comparative example |
| 19 | 1042 | 29.1 | 30322 | 430 | 0.41 | Middle | High | - | Good | Example |
| 20 | 1122 | 30.1 | 33772 | 470 | 0.42 | High | High | High | Good | Example |

| No. | Tensile test results | | | Fatigue test results | | Productivity | Sheet passage ability during hot rolling | Sheet passage ability during cold rolling | Surface characteristics of final amealed sheet | Remarks |
|---|---|---|---|---|---|---|---|---|---|---|
| | TS (MPa) | EL (%) | TS x EL (MPa·%) | Fatigue limit strength (MPa) | Fatigue ratio | | | | | |
| 21 | 1000 | 33.4 | 33400 | 430 | 0.43 | High | High | High | Good | Example |
| 22 | 1041 | 30.8 | 32063 | 440 | 0.42 | High | High | - | Good | Example |
| 23 | 984 | 34.5 | 33948 | 420 | 0.43 | High | High | High | Good | Example |
| 24 | 1008 | 33.1 | 33365 | 440 | 0.44 | High | High | - | Good | Example |
| 25 | 1211 | 27.8 | 33666 | 510 | 0.42 | High | High | High | Good | Example |
| 26 | 678 | 25.8 | 17492 | 310 | 0.46 | High | High | High | Good | Comparative example |
| 27 | 1245 | 10.9 | 13571 | 520 | 0.42 | High | High | - | Good | Comparative example |
| 28 | 679 | 26.9 | 18265 | 320 | 0.47 | High | High | High | Good | Comparative example |

| No. | Tensile test results | | | Fatigue test results | | Productivity | Sheet passage ability during hot rolling | Sheet passage ability during cold rolling | Surface characteristics of final amealed sheet | Remarks |
|---|---|---|---|---|---|---|---|---|---|---|
| | TS (MPa) | EL (%) | TS x EL (MPa·%) | Fatigue limit strength (MPa) | Fatigue ratio | | | | | |
| 29 | 1056 | 30.1 | 31786 | 450 | 0.43 | High | High | - | Good | Example |
| 30 | 1047 | 29.8 | 31201 | 440 | 0.42 | High | High | High | Good | Example |
| 31 | 1070 | 28.4 | 30388 | 470 | 0.44 | High | High | - | Good | Example |
| 32 | 1004 | 32.9 | 33032 | 480 | 0.48 | High | High | High | Good | Example |
| 33 | 1007 | 32.4 | 32627 | 450 | 0.45 | High | High | - | Good | Example |
| 34 | 1004 | 33.9 | 34036 | 430 | 0.43 | High | High | High | Good | Example |
| 35 | 827 | 39.1 | 32336 | 410 | 0.50 | High | High | - | Good | Example |
| 36 | 908 | 35.5 | 32234 | 420 | 0.46 | High | High | - | Good | Example |
| 37 | 1001 | 33.6 | 33634 | 430 | 0.43 | High | High | High | Good | Example |
| 38 | 1033 | 32.0 | 33056 | 460 | 0.45 | High | High | - | Good | Example |
| 39 | 1107 | 28.9 | 31992 | 450 | 0.41 | High | High | High | Good | Example |
| 40 | 1002 | 33.7 | 33767 | 480 | 0.48 | High | High | - | Good | Example |
| No. | Tensile test results | | | Fatigue test results | | Productivity | Sheet passage ability during hot rolling | Sheet passage ability during cold rolling | Surface characteristics of final-annealed sheet | Remarks |
| | TS (MPa) | EL (%) | TSxEL (MPa·%) | Fatigue limit strength (MPa) | Fatigue ratio | | | | | |
| 41 | 1039 | 32.6 | 33871 | 440 | 0.42 | High | High | - | Good | Example |
| 42 | 1026 | 32.8 | 33653 | 500 | 0.49 | High | High | High | Good | Example |
| 43 | 992 | 32.6 | 32339 | 470 | 0.47 | High | High | High | Good | Example |
| 44 | 1048 | 31.2 | 32698 | 460 | 0.44 | High | High | High | Good | Example |
| 45 | 1192 | 29.1 | 34687 | 510 | 0.43 | High | High | - | Good | Example |
| 46 | 994 | 31.4 | 31212 | 470 | 0.47 | High | High | High | Good | Example |
| 47 | 804 | 36.9 | 29668 | 450 | 0.56 | High | High | High | Good | Example |

EP 3 187 601 B1

(continued)

| No. | Tensile test results | | | Fatigue test results | | Productivity | Sheet passage ability during hot rolling | Sheet passage ability during cold rolling | Surface characteristics of final-annealed sheet | Remarks |
|---|---|---|---|---|---|---|---|---|---|---|
| | TS (MPa) | EL (%) | TSxEL (MPa·%) | Fatigue limit strength (MPa) | Fatigue ratio | | | | | |
| 48 | 811 | 34.2 | 27736 | 430 | 0.53 | High | High | - | Good | Example |
| 49 | 1010 | 27.8 | 28078 | 490 | 0.49 | High | High | - | Good | Example |
| 50 | 792 | 34.2 | 27086 | 400 | 0.51 | High | High | High | Good | Example |
| 51 | 995 | 27.8 | 27661 | 470 | 0.47 | High | High | - | Good | Example |
| 52 | 1181 | 24.7 | 29171 | 520 | 0.44 | High | High | High | Good | Example |
| 53 | 1098 | 30.2 | 33160 | 490 | 0.45 | High | High | High | Good | Example |
| 54 | 1119 | 28.9 | 32339 | 520 | 0.46 | High | High | - | Good | Example |
| 55 | 1234 | 27.2 | 33565 | 560 | 0.45 | High | High | High | Good | Example |
| 56 | 989 | 30.1 | 29769 | 480 | 0.49 | High | High | High | Good | Example |
| 57 | 1143 | 28.1 | 32118 | 500 | 0.44 | High | High | High | Good | Example |
| 58 | 1125 | 28.6 | 32175 | 520 | 0.46 | High | High | - | Good | Example |
| 59 | 1081 | 31.4 | 33943 | 500 | 0.46 | High | High | High | Good | Example |

It can be seen that each of our examples has TS of 780 MPa or more, and the present disclosure enables manufacture of high-strength steel sheets with high productivity that are excellent in ductility and fatigue properties. It can also be appreciated that each of our examples exhibits excellent sheet passage ability during hot rolling and cold rolling, as well as excellent surface characteristics of the final-annealed sheet.

In contrast, comparative examples are inferior in terms of one or more of tensile strength, ductility, balance between strength and ductility, fatigue properties, and productivity.

**Claims**

1. A high-strength steel sheet having a tensile strength of 780 MPa or more comprising:

   a steel chemical composition containing, in mass%, C: 0.10 % or more and 0.35 % or less, Si: 0.50 % or more and 2.50 % or less, Mn: 2.00 % or more and less than 3.50 %, P: 0.001 % or more and 0.100 % or less, S: 0.0001 % or more and 0.0200 % or less, and N: 0.0005 % or more and 0.0100 % or less, and optionally at least one element selected from the group consisting of Ti: 0.005 % or more and 0.100 % or less, B: 0.0001 % or more and 0.0050 % or less, Al: 0.01 % or more and 1.00 % or less, Nb: 0.005 % or more and 0.100 % or less, Cr: 0.05 % or more and 1.00 % or less, Cu: 0.05 % or more and 0.50 % or less, Sb: 0.002 % or more and 0.200 % or less, Sn: 0.002 % or more and 0.200 % or less, Ta: 0.001 % or more and 0.100 % or less, Ca: 0.0005 % or more and 0.0050 % or less, Mg: 0.0005 % or more and 0.0050 % or less, and REM: 0.0005 % or more and 0.0050 % or less and the balance consisting of Fe and incidental impurities; and
   a steel structure that contains a total of 25 % or more and 80 % or less by area of ferrite and bainitic ferrite and 10 % or more by volume of retained austenite, and 20% or less by area of balance microstructure including martensite, tempered martensite, pearlite and/or cementite,
   wherein the retained austenite has a mean grain size of 2 |um or less and the bainitic ferrite has a mean free path of 3 $\mu$m or less.

2. A method for manufacturing a high-strength steel sheet having a tensile strength of 780 MPa or more as defined in claim 1, the method comprising:

   preparing a steel slab containing, in mass%, C: 0.10 % or more and 0.35 % or less, Si: 0.50 % or more and 2.50 % or less, Mn: 2.00 % or more and less than 3.50 %, P: 0.001 % or more and 0.100 % or less, S: 0.0001 % or more and 0.0200 % or less, and N: 0.0005 % or more and 0.0100 % or less, and optionally at least one element selected from the group consisting of Ti: 0.005 % or more and 0.100 % or less and B: 0.0001 % or more and 0.0050 % or less, Al: 0.01 % or more and 1.00 % or less, Nb: 0.005 % or more and 0.100 % or less, Cr: 0.05 % or more and 1.00 % or less, Cu: 0.05 % or more and 0.50 % or less, Sb: 0.002 % or more and 0.200 % or less, Sn: 0.002 % or more and 0.200 % or less, Ta: 0.001 % or more and 0.100 % or less, Ca: 0.0005 % or more and 0.0050 % or less, Mg: 0.0005 % or more and 0.0050 % or less, and REM: 0.0005 % or more and 0.0050 % or less, and the balance consisting of Fe and incidental impurities;
   subjecting the steel slab to hot rolling by heating the steel slab to a temperature of 1100 °C or higher and 1300 °C or lower, hot rolling the steel slab with a finisher delivery temperature of 800 °C or higher and 1000 °C or lower to form a hot-rolled steel sheet, and coiling the hot-rolled steel sheet at a mean coiling temperature of 200 °C or higher and 500 °C or lower;
   subjecting the hot-rolled steel sheet to pickling treatment;
   optionally, cold rolling the hot-rolled steel sheet at a rolling reduction of less than 30 % to form a cold-rolled steel sheet and
   subjecting the hot-rolled steel sheet or the cold-rolled steel sheet to annealing by retaining the hot-rolled steel sheet or the cold-rolled steel sheet at a temperature of 740 °C or higher and 840 °C or lower for 10 s or more and 900 s or less, then cooling the hot-rolled steel sheet or the cold-rolled steel sheet at a mean cooling rate of 5 °C/s or higher and 50 °C/s or lower to a cooling stop temperature of higher than 350 °C and 550 °C or lower, and retaining the hot-rolled steel sheet or the cold-rolled steel sheet in a temperature range of higher than 350 °C to 550 °C for 10 s or more.

3. The method for manufacturing a high-strength steel sheet having a tensile strength of 780 MPa or more according to claim 2, the method further comprising after the annealing, subjecting the hot-rolled steel sheet or the cold-rolled steel sheet to galvanizing treatment.

**Patentansprüche**

1. Hochfestes Stahlblech, das eine Zugfestigkeit von 780 MPa oder mehr aufweist, umfassend:

   eine chemische Stahlzusammensetzung, die in Masse% enthält: C: 0,10 % oder mehr und 0,35 % oder weniger, Si: 0,50 % oder mehr und 2,50 % oder weniger, Mn: 2,00 % oder mehr und weniger als 3,50 %, P: 0,001 % oder mehr und 0,100 % oder weniger, S: 0,0001 % oder mehr und 0,0200 % oder weniger und N: 0,0005 % oder mehr und 0,0100 % oder weniger und optional wenigstens ein Element, ausgewählt aus der Gruppe bestehend aus Ti: 0,005 % oder mehr und 0,100 % oder weniger, B: 0,0001 % oder mehr und 0,0050 % oder weniger, Al: 0,01 % oder mehr und 1,00 % oder weniger, Nb: 0,005 % oder mehr und 0,100 % oder weniger, Cr: 0,05 % oder mehr und 1,00 % oder weniger, Cu: 0,05 % oder mehr und 0,50 % oder weniger, Sb: 0,002 % oder mehr und 0,200 % oder weniger, Sn: 0,002 % oder mehr und 0,200 % oder weniger, Ta: 0,001 % oder mehr und 0,100 % oder weniger, Ca: 0,0005 % oder mehr und 0,0050 % oder weniger, Mg: 0,0005 % oder mehr und 0,0050 % oder weniger und REM: 0,0005 % oder mehr und 0,0050 % oder weniger, wobei der Rest aus Fe und zufälligen Verunreinigungen besteht; und
   eine Stahlstruktur, die einen Gesamtanteil von 25 % oder mehr und 80 % oder weniger, bezogen auf die Fläche, an Ferrit und bainitischem Ferrit und 10 % oder mehr, bezogen auf das Volumen, an Restaustenit und 20 % oder weniger, bezogen auf die Fläche, an restlicher Mikrostruktur, die Martensit, angelassenen Martensit, Perlit und/oder Zementit umfasst, enthält,
   wobei der Restaustenit eine mittlere Korngröße von 2 $\mu$m oder weniger aufweist und der bainitische Ferrit eine mittlere freie Weglänge von 3 $\mu$m oder weniger aufweist.

2. Verfahren zur Herstellung eines hochfesten Stahlblechs, das eine Zugfestigkeit von 780 MPa oder mehr aufweist, wie in Anspruch 1 definiert, wobei das Verfahren umfasst:

   Herstellen einer Stahlbramme, die in Masse% enthält: C: 0,10 % oder mehr und 0,35 % oder weniger, Si: 0,50 % oder mehr und 2,50 % oder weniger, Mn: 2,00 % oder mehr und weniger als 3,50 %, P: 0,001 % oder mehr und 0,100 % oder weniger, S: 0,0001 % oder mehr und 0,0200 % oder weniger und N: 0,0005 % oder mehr und 0,0100 % oder weniger und optional wenigstens ein Element, ausgewählt aus der Gruppe bestehend aus Ti: 0,005 % oder mehr und 0,100 % oder weniger, B: 0,0001 % oder mehr und 0,0050 % oder weniger, Al: 0,01 % oder mehr und 1,00 % oder weniger, Nb: 0,005 % oder mehr und 0,100 % oder weniger, Cr: 0,05 % oder mehr und 1,00 % oder weniger, Cu: 0,05 % oder mehr und 0,50 % oder weniger, Sb: 0,002 % oder mehr und 0,200 % oder weniger, Sn: 0,002 % oder mehr und 0,200 % oder weniger, Ta: 0,001 % oder mehr und 0,100 % oder weniger, Ca: 0,0005 % oder mehr und 0,0050 % oder weniger, Mg: 0,0005 % oder mehr und 0,0050 % oder weniger und REM: 0,0005 % oder mehr und 0,0050 % oder weniger, wobei der Rest aus Fe und zufälligen Verunreinigungen besteht;
   Vornehmen eines Warmwalzens der Stahlbramme durch Erwärmen der Stahlbramme auf eine Temperatur von 1100 °C oder höher und 1300 °C oder niedriger, Warmwalzen der Stahlbramme mit einer Fertiggruppen-Ausstoßtemperatur von 800 °C oder höher und 1000 °C oder niedriger, um ein warmgewalztes Stahlblech auszubilden, und Aufwickeln des warmgewalzten Stahlblechs bei einer mittleren Aufwickeltemperatur von 200 °C oder höher und 500 °C oder niedriger;
   Vornehmen einer Beizbehandlung des warmgewalzten Stahlblechs;
   optional Kaltwalzen des warmgewalzten Stahlblechs mit einem Abwalzgrad von weniger als 30 %, um ein kaltgewalztes Stahlblech auszubilden, und
   Vornehmen eines Glühens des warmgewalzten Stahlblechs oder des kaltgewalzten Stahlblechs durch Halten des warmgewalzten Stahlblechs oder des kaltgewalzten Stahlblechs bei einer Temperatur von 740 °C oder höher und 840 °C oder niedriger für 10 s oder mehr und 900 s oder weniger, anschließendes Abkühlen des warmgewalzten Stahlblechs oder des kaltgewalzten Stahlblechs mit einer mittleren Abkühlgeschwindigkeit von 5 °C/s oder höher und 50 °C/s oder niedriger bis zu einer Abkühlstopptemperatur von über 350 °C und 550 °C oder niedriger und Halten des warmgewalzten Stahlblechs oder des kaltgewalzten Stahlblechs in einem Temperaturbereich von über 350 °C bis 550 °C für 10 s oder mehr.

3. Verfahren zur Herstellung eines hochfesten Stahlblechs, das eine Zugfestigkeit von 780 MPa oder mehr aufweist, nach Anspruch 2, wobei das Verfahren ferner nach dem Glühen ein Vornehmen einer Galvanisierungsbehandlung des warmgewalzten Stahlblechs oder des kaltgewalzten Stahlblechs umfasst.

**Revendications**

1. Une tôle d'acier à haute résistance présentant une résistance à la traction de 780 MPa ou plus comprenant :

une composition chimique de l'acier contenant en % en masse, C : 0,10 % ou plus et 0,35 % ou moins, Si : 0,50 % ou plus et 2,50 % ou moins, Mn : 2,00 % ou plus et moins de 3,50 %, P : 0,001 % ou plus et 0,100 % ou moins, S : 0,0001 % ou plus et 0,0200 % ou moins et N : 0,0005 % ou plus et 0,0100 % ou moins, et éventuellement au moins un élément sélectionné dans le groupe composé de Ti : 0,005 % ou plus et 0,100 % ou moins, B : 0,0001 % ou plus et 0,0050 % ou moins, Al : 0,01 % ou plus et 1,00 % ou moins, Nb : 0,005 % ou plus et 0,100 % ou moins, Cr : 0,05 % ou plus et 1,00 % ou moins, Cu : 0,05 % ou plus et 0,50 % ou moins, Sb : 0,002 % ou plus et 0,200 % ou moins, Sn : 0,002 % ou plus et 0,200 % ou moins, Ta : 0,001 % ou plus et 0,100 % ou moins, Ca : 0,0005 % ou plus et 0,0050 % ou moins, Mg : 0,0005 % ou plus et 0,0050 % ou moins et REM : 0,0005 % ou plus et 0,0050 % ou moins et le reste constitué de Fe et d'impuretés accidentelles ; et une structure d'acier qui contient un total de 25 % ou plus et de 80 % ou moins par surface de ferrite et de ferrite bainitique et de 10 % ou plus par volume d'austénite retenue et de 20 % ou moins par surface de la microstructure restante comprenant de la martensite, de la martensite trempée, de la perlite et/ou de la cémentite, dans laquelle l'austénite retenue présente une taille moyenne des grains de 2 $\mu$m ou moins et la ferrite bainitique présente un parcours libre moyen de 3 $\mu$m ou moins.

2. Un procédé de fabrication d'une tôle d'acier à haute résistance présentant une résistance à la traction de 780 MPa ou plus comme définie dans la revendication 1, le procédé consistant :

à préparer une brame d'acier contenant en % en masse, C : 0,10 % ou plus et 0,35 % ou moins, Si : 0,50 % ou plus et 2,50 % ou moins, Mn : 2,00 % ou plus et moins de 3,50 %, P : 0,001 % ou plus et 0,100 % ou moins, S : 0,0001 % ou plus et 0,0200 % ou moins et N : 0,0005 % ou plus et 0,0100 % ou moins, et éventuellement au moins un élément sélectionné dans le groupe composé de Ti : 0,005 % ou plus et 0,100 % ou moins et B : 0,0001 % ou plus et 0,0050 % ou moins, Al : 0,01 % ou plus et 1,00 % ou moins, Nb : 0,005 % ou plus et 0,100 % ou moins, Cr : 0,05 % ou plus et 1,00 % ou moins, Cu : 0,05 % ou plus et 0,50 % ou moins, Sb : 0,002 % ou plus et 0,200 % ou moins, Sn : 0,002 % ou plus et 0,200 % ou moins, Ta : 0,001 % ou plus et 0,100 % ou moins, Ca : 0,0005 % ou plus et 0,0050 % ou moins, Mg : 0,0005 % ou plus et 0,0050 % ou moins et REM : 0,0005 % ou plus et 0,0050 % ou moins, et le reste constitué de Fe et d'impuretés accidentelles ; et à soumettre la brame d'acier au laminage à chaud en chauffant la brame d'acier à une température de 1 100 °C ou plus et de 1 300 °C ou moins, laminant à chaud la brame d'acier avec une température de livraison de finition de 800 °C ou plus et de 1 000 °C ou moins pour former une tôle d'acier laminée à chaud, et enroulant la tôle d'acier laminée à chaud à une température moyenne d'enroulement de 200 °C ou plus et de 500 °C ou moins ;
à soumettre la tôle d'acier laminée à chaud à un traitement de décapage ;
éventuellement, en laminant à froid la tôle d'acier laminée à chaud à une réduction de roulement inférieure à 30 % pour former une tôle d'acier laminée à froid et
à soumettre la tôle d'acier laminée à chaud ou la tôle d'acier laminée à froid au recuit en conservant la tôle d'acier laminée à chaud ou la tôle d'acier laminée à froid à une température de 740 °C ou plus et de 840 °C ou moins pendant 10 s ou plus et 900 s ou moins, puis à refroidir la tôle d'acier laminée à chaud ou la tôle d'acier laminée à froid à une vitesse moyenne de refroidissement de 5 °C/s ou plus et de 50 °C/s ou moins à une température d'arrêt de refroidissement supérieure à 350 °C et 550 °C ou moins, et à conserver la tôle d'acier laminée à chaud ou la tôle d'acier laminée à froid dans une plage de température supérieure à 350 °C et 550 °C pendant 10 s ou plus.

3. Le procédé de fabrication d'une tôle d'acier à haute résistance présentant une résistance à la traction de 780 MPa ou plus selon la revendication 2, le procédé consistant en outre après le recuit, à soumettre la tôle d'acier laminée à chaud ou la tôle d'acier laminée à froid au traitement de galvanisation.

## REFERENCES CITED IN THE DESCRIPTION

**Patent documents cited in the description**

- JP 2004218025 A
- JP 2011195956 A
- JP 201090475 A
- JP 2008174802 A
- JP 2010275627 A
- JP 4268079 B
- EP 2182080 A